# EUROPEAN PATENT APPLICATION

(11) **EP 4 576 082 A1**
(43) Date of publication of application: **25.06.2025**
(21) Application number: 23219960.4
(22) Date of filing: 22.12.2023
(51) Int. Cl.: G10L 25/30, G06N 3/0442, G10L 21/02

(54) **AUDIO DEVICE WITH EFFICIENT NEURAL NETWORK PROCESSING AND RELATED METHODS**

(71) Applicant: GN Hearing A/S, 2750 Ballerup (DK)
(72) Inventor: LAROCHE, Clément, 2750 Ballerup (DK); MICCINI, Riccardo, 2750 Ballerup (DK); PIECHOWIAK, Tobias, 2750 Ballerup (DK)
(74) Representative: Aera A/S

(57) **Abstract**

An audio device comprising an audio enhancement module comprising a first neural network with first model layers including a first input layer, a plurality of first intermediate layers, and a first output layer; and a first exit module; wherein the audio enhancement module is configured to process an audio input signal for provision of an audio output signal using the first neural network, and wherein at least one of the first intermediate layers has an exit possibility for providing an intermediate layer output, and wherein the first exit module is configured to determine whether the intermediate layer output satisfies a first criterion, wherein the first criterion is indicative of a performance, a quality, and/or an efficiency of the intermediate layer output, and wherein in accordance with the intermediate layer output satisfying the first criterion, the audio device is configured to determine the audio output signal based on the intermediate layer output.

## Description

The present disclosure pertains to the field of audio devices and methods performed by audio devices, and in particular to audio devices for enabling efficient neural network processing and related methods.

### BACKGROUND

Signal processing, such as using Deep Neural Networks (DNN), along with other types of neural networks, are rapidly becoming integral components of electronic devices, such as audio devices, due to their ability to tackle previously unsolvable problems using traditional methods. With the continuous advancement and increased usage of neural networks, e.g., in audio signal processing, the reliability of their predictions is becoming increasingly important. DNNs have the ability to learn complex patterns in large amounts of data and make accurate predictions based on that knowledge. They have proven to be effective in tasks such as speech recognition, speaker identification, and speech synthesis, among others.

One of the key advantages of DNNs in speech processing is their ability to learn hierarchical representations of speech signals, capturing both the low-level acoustic features and the high-level semantic information. This enables DNNs to perform well even in noisy environments, where traditional speech processing methods may struggle.

### SUMMARY

However, despite their impressive performance, there are some limitations to the use of DNNs in small devices. One of the main limitations is computational power. DNNs are complex models with many parameters that require significant computing resources to train and use. This can be a challenge for small devices, which typically have limited processing capabilities and battery life.

Dynamic neural networks (DyNN), also known as dynamic models, can help reduce the computational cost of running a DNN in a small device by adjusting the model's configuration (such as the model's architecture, computational graph, path, and/or road) and parameters during runtime based on the input data. Therefore, Dynamic neural networks (DyNN) can be more computationally efficient than traditional static neural networks.

Accordingly, there is a need for audio devices with efficient neural network processing and methods performed by an audio device, which may mitigate, alleviate, or address the existing shortcomings and may provide improved efficiency of neural network processing and in turn resulting in lower computational cost and battery saving.

An audio device is disclosed. The audio device may be configured to act as a receiver device and/or a transmitter device. The audio device may comprise a memory, an interface, and one or more processors. Optionally the audio device comprises one or more output transducers, such as one or more loudspeakers, and one or more input transducers, such as one or more microphones. In one or more examples or embodiments, the one or more processors are configured to obtain audio data, such as an audio input signal. In other words, the audio device may be configured to obtain audio data, such as the audio input signal, using the one or more processors and/or via the interface.

The audio device comprises an audio enhancement module comprising a first neural network with first model layers including a first input layer, a plurality of first intermediate model layers, and a first output layer. The audio device comprises a first exit module. The audio device, such as the audio enhancement module, is configured to process an audio input signal for provision of an audio output signal using the first neural network. Optionally, at least one of the first intermediate layers has an exit possibility for providing an intermediate layer output. Optionally, the audio device, such as the first exit module, is configured to determine whether the intermediate layer output satisfies a first criterion. The first criterion may be indicative of a quality of an intermediate layer output. In accordance with the intermediate layer output satisfying the first criterion, the audio device may be configured to determine the audio output signal e.g., based on the intermediate layer output.

A method performed by an audio device is disclosed. The method may be for enabling efficient neural network processing, where the audio device comprises an audio enhancement module comprising a first neural network with first model layers including a first input layer, a plurality of first intermediate model layers, and a first output layer; and a first exit module. The method comprises processing an audio input signal for provision of an audio output signal e.g., using the first neural network. Optionally, at least one of the first intermediate layers has an exit possibility for providing an intermediate layer output. The method comprises determining, e.g., using the first exit module, whether the intermediate layer output satisfies a first criterion, e.g., where the first criterion is indicative of a quality of an intermediate layer output. The method comprises in accordance with the intermediate layer output satisfying the first criterion, determining the audio output signal e.g., based on the intermediate layer output.

The present disclosure provides an audio device and related method with improved processing efficiency when using a neural network, such as improved processing efficiency when using a dynamic neural network (e.g., using a conditional computation neural network). The present disclosure may reduce the extend of a neural network that is used to perform a certain task (such as reduce the parts of a neural network that are used to perform a certain task). For example, the present disclosure allows to perform a certain task with a neural network by only using a subset of its layers, e.g., without having to execute or perform all the layers of the neural network. In turn, the present disclosure provides an audio device with reduced battery consumption and therefore increased battery life while performing more efficient processing. In other words, the present disclosure allows to reduce computational cost and increase battery life for the same performance. The present disclosure provides a more versatile audio device with dynamically adjustable neural network processing depending on one or more parameters, such as quality of output, parameters of an audio device (such as capability), and/or user preferences. In other words, the present disclosure allows to adjust a computational cost of processing of a neural network based on the size and/or capability of an audio device. For example, the present disclosure may allow to adjust a neural network model's architecture and parameters during runtime based on the input data and the output of the neural network model.

### BRIEF DESCRIPTION OF THE DRAWINGS

The above and other features and advantages of the present disclosure will become readily apparent to those skilled in the art by the following detailed description of examples thereof with reference to the attached drawings, in which:
Fig. 1 schematically illustrates an example audio device according to the present disclosure,
Fig. 2A-2B shows a flow chart of an example method according to the present disclosure,
Fig. 3 schematically illustrates an example audio device according to the present disclosure where a technique as disclosed herein is applied,
Fig. 4 schematically illustrates an example audio device according to the present disclosure, where a first training technique as disclosed herein is applied,
Fig. 5 schematically illustrates an example audio device according to the present disclosure, where a second training technique as disclosed herein is applied, and
Fig. 6 schematically illustrates an example audio device according to the present disclosure, where a third training technique as disclosed herein is applied.

### DETAILED DESCRIPTION

Various examples and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the examples. They are not intended as an exhaustive description of the disclosure or as a limitation on the scope of the disclosure. In addition, an illustrated example needs not have all the aspects or advantages shown. An aspect or an advantage described in conjunction with a particular example is not necessarily limited to that example and can be practiced in any other examples even if not so illustrated, or if not so explicitly described.

The figures are schematic and simplified for clarity, and they merely show details which aid understanding the disclosure, while other details have been left out. Throughout, the same reference numerals are used for identical or corresponding parts.

An audio device is disclosed. The audio device may be configured to act as receiver device and/or a transmitter device. In other words, the audio device is configured to receive input signals, such as audio data, from an audio device configured to act as a transmitter device or vice versa. The audio device as disclosed herein may comprise one or more interfaces, one or more audio speakers, one or more microphones, e.g., including a first microphone, one or more processors, and one or more memories. The one or more interfaces may comprise one or more of: a wireless interface, a wireless transceiver, an antenna, an antenna interface, a microphone interface, and a speaker interface.

Further, the audio device may comprise one or more microphones, such as a first microphone, optionally a second microphone, optionally a third microphone and optionally a fourth microphone. The audio device may comprise one or more audio speakers, such as audio receivers, e.g., loudspeaker(s).

The audio device may be seen as an audio device configured to obtain audio data, such as input signals, e.g., audio input signals, output audio signals, and process input signals, such as audio input signals. The audio device may be seen as or comprise a headset, a speakerphone, a hearing aid and/or a video-bar. The audio device may for example be seen as a conference audio device, e.g., configured to be used by a party (such as one or more users at a near-end) to communicate with one or more other parties (such as one or more users at a far-end). The audio device configured to act as a receiver device may also be configured to act as a transmitter device when transmitting back an output signal to the far-end. The receiver audio device and the transmitter audio device may therefore switch between being receiver audio device and transmitter audio device. The audio device may be seen as a smart audio device. The audio device may be used for a conference and/or a meeting between two or more parties being remote from each other. The audio device may be used by one or more users in a vicinity of where the audio device is located, also referred to as a near-end. The audio device may be configured to output, such as using the audio speaker and based on the input signal, an audio device output at the receiver end. The audio device output may be seen as an audio output signal that is an output of the audio speaker at a near-end where the audio device and the user(s) of the audio device are located.

The audio device may be a single audio device. The audio device may be seen as a plurality of interconnected audio devices, such as a system, e.g., an audio device system. The system may comprise one or more users.

In one or more example audio devices, the interface comprises a wireless transceiver, also denoted as a radio transceiver, and an antenna for wireless transmission and reception of an input signal, such as an audio signal, such as for wireless transmission of an output signal and/or wireless reception of a wireless input signal. The audio device may be configured for wireless communication with one or more electronic devices, such as another audio device, a smartphone, a tablet, a computer and/or a smart watch. The audio device optionally comprises an antenna for converting one or more wireless input audio signals to antenna output signal(s). The audio device system and/or the audio device, may be configured for wireless communications via a wireless communication system, such as short-range wireless communications systems, such as Wi-Fi, Bluetooth, Zigbee, IEEE 802.11, IEEE 802.15, infrared and/or the like.

The audio device system and/or the audio device, may be configured for wireless communications via a wireless communication system, such as a 3GPP system, such as a 3GPP system supporting one or more of: New Radio, NR, Narrow-band IoT, NB-IoT, and Long Term Evolution - enhanced Machine Type Communication, LTE-M, millimeter-wave communications, such as millimeter-wave communications in licensed bands, such as device-to-device millimeter-wave communications in licensed bands.

In one or more example audio device systems and/or audio devices, the interface of the audio device comprises one or more of: a Bluetooth interface, Bluetooth low energy interface, and a magnetic induction interface. For example, the interface of the audio device may comprise a Bluetooth antenna and/or a magnetic interference antenna.

In one or more example audio devices, the interface may comprise a connector for wired communication, via a connector, such as by using an electrical cable. The connector may connect one or more microphones to the audio device. The connector may connect the audio device to an electronic device, e.g., for wired connection. The connector may be seen as an electrical connector, such as a physical connector for connecting the audio device via an electrical wire to another device.

The one or more interfaces can be or comprise wireless interfaces, such as transmitters and/or receivers, and/or wired interfaces, such as connectors for physical coupling. For example, the audio device may have an input interface configured to receive data, such as a microphone input signal. In one or more example audio devices, the audio device can be used for all form factors in all types of environments, such as for headsets and/or video conference equipment. For example, the audio device may not have a specific microphone placement requirement. In one or more example audio devices, the audio device may comprise an external microphone.

The audio device comprises an audio enhancement module comprising a first neural network with first model layers including a first input layer, a plurality of first intermediate model layers, and a first output layer. The audio enhancement module may be seen as a module configured to operate according to the first neural network. The audio enhancement module, such as the first neural network, may be for processing of audio data, such as processing of an audio input signal. The audio enhancement module may be configured to process an audio input signal by using ML-based methods and/or signal processing-based methods, e.g., by using the first neural network. It may be appreciated that the audio enhancement module may be seen as and/or denoted as an audio model module. The terms audio enhancement module and audio model module may be used interchangeably. In one or more examples or embodiments, the audio enhancement module may alternatively or additionally be seen as a noise suppression module and/or a denoising module.

The plurality of first intermediate layers may be considered as hidden layers (such as hidden features). The plurality of first intermediate layers may include a first primary intermediate layer, a first secondary intermediate layer, a first tertiary intermediate layer etc. The first neural network may be configured to operate according to model, such as a machine learning model, e.g., a first machine learning model. A model as referred to herein (such as the first machine learning model) may be seen as a model and/or a scheme and/or a mechanism and/or a method configured to process, based on a layer output of the first neural network, e.g., based on an intermediate layer output and/or a previous model, the audio input signal. In one or more examples or embodiments, the first neural network is a dynamic neural network, DyNN. The first neural network may be configured to operate according to a first dynamic model. A dynamic model may be seen as a model being capable of adjusting its architecture and parameters during runtime.

In one or more example audio devices, a model as referred to herein may be stored on a non-transitory storage medium (for example, on the memory of the audio device). The model may be stored on a non-transitory storage medium of the audio device being configured to execute the model. In one or more example audio devices, the model may comprise model data and or computer readable instructions (for example based on the audio input signal, features of the audio input signal, audio device parameters, and/or intermediate layer outputs as disclosed herein). The model data and/or the computer readable instructions may be used by the audio device. The model (such as model data and/or the computer readable instructions) may be used by the audio device to process the audio data, such as the audio input signal.

In one or more examples or embodiments, the audio device is configured to obtain, such as using the one or more processors and/or via the interface, audio data, such as an audio input signal. In one or more example audio devices, the audio device may be configured to obtain an input signal, such as an audio input signal, from a transmitter device. In one or more example audio devices, the audio device is configured to obtain the audio data from a far-end, such as a far-end party or user(s). For example, the processor may be configured to obtain audio data (such as audio input signal) via one or more microphones of the audio device, such as microphones associated with and/or comprised in the audio device. The audio data may comprise and/or be based on one or more audio signals obtained by the audio device. In other words, the transmitter device may be seen as an audio device at a far-end. The audio data may be seen as data comprising audio. In one or more embodiments or examples, the audio input signal has undergone signal processing, such as encoding, compression, and/or enhancement, at the transmitter device. The audio data may be indicative of an audio signal generated by user(s) at the far-end. In other words, the audio data may be indicative of speech, such as speech from the far-end transmitter device. The audio data may be based on and/or be seen as an output signal of the transmitter device, such as of a signal processor of the transmitter device. To obtain the audio data may comprise to retrieve and/or receive the audio data. The audio data (such as the audio input signal) may be based on input signal(s), such as speech, from the near-end when obtained from one or more microphones, such as a first microphone and/or a second microphone, of the audio device. The audio data may be based on the input signal(s), such as based on a first microphone input signal, a second microphone input signal, and/or a transceiver input signal.

The audio device is configured to process, such as using the one or more processors, an audio input signal, such as audio data, for provision of an audio output signal using the first neural network. To process the audio input signal for provision of an audio output signal may comprise to perform one or more audio processing steps of the audio input signal. For example, to process the audio input signal for provision of an audio output signal may comprise to perform, such as using a signal processor, noise reduction, such as background noise reduction, of the audio input signal, e.g., for provision of a denoised audio output signal. Other examples may comprise to process the audio input signal for provision of an audio output signal may comprise to perform, such as using the first neural network, filtering of the audio input signal for provision of a filtered audio output signal and/or speech enhancement tasks of the audio input signal. Further, to process the audio input signal for provision of an audio output signal may comprise to perform compression of the audio input signal. The signal processor may comprise the audio enhancement module and perform processing according to the audio enhancement module for provision of the audio output signal, e.g., echo control, dereverberation, denoising, and/or beamforming.

In one or more examples or embodiments, at least one of the first intermediate layers has an exit possibility for providing an intermediate layer output. In other words, at least one first intermediate layer of the plurality of first intermediate layers is configured to provide an exit possibility in the processing of the audio input signal by the audio enhancement module for provision of an intermediate layer output. The intermediate layer output may be seen as the result of an exit possibility. An exit possibility may be seen as a possibility for the audio device, such as the audio enhancement module, to exit during the processing of the audio input signal and generate an intermediate layer output based on the first intermediate layer. In other words, an exit possibility may be seen as a possibility to exit the processing of the audio input signal using the first neural network before the first output layer, e.g., a possibility for early exit. For example, an exit possibility may be seen as at least one of the first intermediate layers being configured to provide a useful intermediate layer output for determining an audio output signal where a given audio processing task has been performed. In other words, at least one of the first intermediate layers may be configured to provide an intermediate layer output configured to perform an intended audio processing task, such as denoising, echo suppression, and/or dereverberation of the audio input signal.

In one or more examples or embodiments, at least some of the first intermediate layers have an exit possibility. For example, at least two, at least three, at least five, at least ten of the first intermediate layers have an exit possibility. In one or more examples or embodiments, each of the first intermediate layers has an exit possibility. In one or more examples or embodiments, the first intermediate layers having an exit possibility are uniformly spread or divided. Uniformly spread or divided may be seen as each first intermediate layer comprising or requiring substantially the same amount of processing and/or each first intermediate layer providing substantially the same amount of advancement, such as processing advancement. In other words, uniformly spread or divided may be seen as the processing of the audio input signal may be uniformly spread or divided between the first intermediate layers. The one or more first intermediate layers may comprise a first primary intermediate layer, a first secondary intermediate layer, a first tertiary intermediate layer etc. The one or more first intermediate layers may be seen as located between the first input layer and the first output layer.

The audio device comprises a first exit module. The first exit module may be seen as a module configured to assess one or more characteristics of an output of a model layer, such as a first model layer. In other words, the first exit module may be configured to determine whether an output of a model layer, such as a first model layer, satisfies one or more criteria (such as performance, quality, and/or efficiency criteria, e.g., the first criterion as disclosed herein) or if more processing is needed. The one or more criteria may for example comprise or be based on one or more of: a speech quality criterion, a latency criterion, a speech intelligibility criterion, an SNR criterion, a learned criterion (such as learned by the first exit module), and a multidimensional threshold (e.g., a threshold taking into account multiple parameters such as performance, quality, and/or efficiency at the same time). In one or more examples or embodiments, the first neural network may be seen as or comprise a recursive neural network, e.g., having the same weights at each layer. By having a recursive neural network having the same weights at each layer, it may be easier for the first exit module to assess an output of a model layer, such as assess whether an output satisfies a criterion, since the outputs at each layer may represent similar transformations (which may be easier to compare and/or assess in view of a common criterion and/or threshold).

The first exit module may be seen as an early-exit estimator module and/or a quality assessment module. The terms first exit module, early-exit estimator module and quality assessment module may be used interchangeably. The first exit module may be seen as a gating module, e.g., configured to compare the intermediate layer output with a threshold, such as the first threshold, and/or compare the intermediate layer output combined with the audio input signal with a threshold, such as the first threshold. It may be appreciated that the first exit module may be comprised by or form part of the audio enhancement module.

The first exit module is configured to determine whether the intermediate layer output satisfies a first criterion, wherein the first criterion is indicative of a performance, a quality, and/or an efficiency of an intermediate layer output.

The first criterion may be seen as a criterion indicating when the intermediate layer output is indicative of a satisfying performance, quality, and/or efficiency of processing. In other words, when the first criterion is satisfied, the intermediate layer output is indicative of a satisfying processing performance, quality, and/or efficiency for given task to be performed by the first neural network. The first criterion may comprise a first threshold. In one or more example audio devices, in accordance with the intermediate layer output satisfying the first criterion, the one or more processors are configured to determine the audio output signal based on the intermediate layer output. It may be appreciated that the first criterion is satisfied when the intermediate layer output is above or equal to the first threshold. The first criterion may for example comprise or be based on one or more of: a speech quality criterion, a latency criterion, a speech intelligibility criterion, an SNR criterion, a learned criterion (such as learned by the first exit module), and a multidimensional threshold (e.g., a threshold taking into account multiple parameters such as performance, quality, and/or efficiency at the same time). The first criterion may be seen as a learned criterion indicative of certain characteristics of the intermediate layer output. A learned criterion may be based on a vote and/or score threshold to determine whether to continue the processing with the first neural network (such as stay in the first neural network) or to leave or exit the processing with the first neural network, where the highest vote or the score in comparison with the score threshold decides the further process. For example, the first criterion may indicate that further processing is not needed, e.g., that the intermediate layer output already fulfills a certain condition (such as quality condition) and/or cannot be significantly improved. The first threshold may be adaptable, e.g., based on a desired quality of speech, audio device parameters, and/or audio input signal features.

The first exit module may determine whether an estimated signal to noise ratio, SNR, of the intermediate layer output and/or a predicted mean opinion score, MOS, of the intermediate layer output satisfy the first criterion. In other words, the first criterion may be based on an SNR and/or a MOS, e.g., the first threshold may comprise or be based on an SNR and/or a MOS.

In one or more examples or embodiments, the first exit module may determine whether one or more parameters of the intermediate layer output satisfy the first criterion. For example, the first exit module may determine whether a parameter based on a perceptual evaluation of speech quality, PESO, and/or based on a deep noise suppression mean opinion score, DNSMOS, satisfies the first criterion. However, PESO and DNSMOS may require samples that are in the seconds range (such as audio samples of several seconds). It may therefore require too much time to use these parameters for assessing whether the intermediate layer output satisfies the first criterion. In one or more examples or embodiments, the first exit module may determine whether a parameter based on parameters/features that require only signal samples in the ms range to estimate the quality of the intermediate layer output. For example, the first exit module may determine whether the intermediate layer output satisfies the first criterion by determining whether a non-intrusive performance, quality, and/or efficiency score of the intermediate layer output satisfies the first criterion. A non-intrusive performance, quality, and/or efficiency score may for example comprise a SNR score. It may be appreciated that the first exit module may determine a non-intrusive performance, quality, and/or efficiency score by extracting a label directly from the intermediate layer output without applying the intermediate layer output on the audio input signal. A parameter of the intermediate layer output may for example comprise a speech quality metric, such as Virtual Speech Quality Objective Listener, ViSQOL, and/or Perceptual Objective Listening Quality Analysis, POLQA. Another example of a parameter of the intermediate layer output may for example be an energy consumption of the processing with a certain intermediate layer versus a quality and/or performance of the intermediate layer output.

In one or more examples or embodiments, the intermediate layer output may comprise a mask to apply in the processing of the audio input signal for provision of the audio output signal. For example, the intermediate layer output may comprise a mask for performing a certain task of audio processing, such as removing noise of the audio input signal for provision of a denoised audio output signal. For example, the intermediate layer output may comprise a set of filtering parameters constituting a mask to be applied to the audio input signal for filtering it. For example, the intermediate layer output may comprise an estimated spectrogram indicating how much each frequency component at each time should be attenuated or amplified.

In accordance with the intermediate layer output satisfying the first criterion, the audio device is configured to determine the audio output signal based on the intermediate layer output. The audio device may be configured to apply the intermediate layer output in the processing of the audio input signal for provision of the audio output signal. For example, the audio device may be configured to apply a mask from the intermediate layer output to the audio input signal. When it is determined that the intermediate layer output satisfies the first criterion, the audio device is configured to perform an early exit from the processing of the first neural network, and exit the first neural network at the first intermediate layer providing the intermediate layer output. In other words, when the intermediate layer output is determined/assessed to satisfy a certain performance, quality, and/or efficiency of processing of the audio input signal, the audio device is configured to stop or interrupt the processing using the first neural network and exit the first neural network at the first intermediate layer providing the intermediate layer output.

When it is determined that the intermediate layer output does not satisfy the first criterion, the audio device is configured to refrain from performing an early exit from the processing of the first neural network, and refrain from exiting the first neural network at the first intermediate layer providing the intermediate layer output. In other words, when the intermediate layer output is determined/assessed not to satisfy a certain performance, quality, and/or efficiency of processing of the audio input signal, the audio device is configured to continue or proceed with the processing using the first neural network, e.g., to the next first intermediate layer or output layer.

It may be appreciated that the first criterion is not satisfied when the intermediate layer output is below the first threshold.

In one or more examples or embodiments, the first exit module is configured to output an outcome of the determination of whether the intermediate layer output satisfies the first criterion. In one or more examples or embodiments, the audio enhancement module is configured to process the audio input signal based on the outcome of the determination of whether the intermediate layer output satisfies the first criterion.

The present disclosure may therefore reduce the extend of a neural network that is used to perform a certain task (such as reduce the parts of the first neural network that are used to perform a certain task). For example, the present disclosure allows to perform a certain task with the first neural network by only using a subset of its layers, e.g., without having to execute or perform all the layers of the first neural network, i.e. by allowing an early exit. In other words, certain parts of the first neural network may be activated or deactivated, e.g., by the first exit module and/or the second exit module, based on the input data. For example, certain parts of the first neural network may be activated or deactivated, e.g., by the first exit module and/or the second exit module, based on the determination of whether the first output layer output satisfies the first criterion or not. For example, in a speech enhancement task, the first neural network may only use a subset of its layers for quiet or background noise-free speech and activate additional layers for speech in noisy environments. This way, the first neural network can use fewer resources to process the input data, resulting in lower computational cost.

In one or more examples or embodiments, the audio device comprises a second exit module configured to obtain one or more features of the audio input signal including a first feature. The second exit module may be seen as a module of the audio device, such as a module of the one or more processors of the audio device, which may be configured to pre-process the audio input signal before the audio input signal is processed by the audio device, such as before the audio input signal is processed by the audio enhancement module. To obtain the one or more features of the audio input signal may comprise to extract and/or determine one or more features, such as one or more audio features, from the audio input signal. The second exit module may be configured to predict which layer, such as which first model layer of the first neural network, will be an optimal layer to exit from when processing the audio input signal. The prediction of a predicted layer (such as the first predicted layer, the second predicted layer, and/or the third predicted layer as disclosed herein) may be based on the one or more features (such as based on a quality of the audio input signal), a prediction of a quality of an output (such as based on a quality of an output of the first predicted layer), a performance of an output of a layer (such as based on a performance of an output of the first predicted layer), user preferences, and/or one or more audio device parameters (such as based on a capability of the audio device). The second exit module may be seen as a pre-processing module. The terms second exit module and pre-processing module may be used interchangeably.

In one or more examples or embodiments, the audio device, such as the second exit module, is configured to process the audio input signal for provision of one or more audio parameters indicative of one or more characteristics or properties of the audio input signal. The one or more features of the audio input signal, such as the first feature, may be seen as audio parameters. The one or more features may be seen as quality parameters of the audio input signal, such as indicative of audio quality of the audio data. The one or more features may for example be indicative of one or more characteristics of the audio input signal such as one or more of: bitrates, sample rates, dynamic ranges, frequency responses, distortion, noise levels, stereo imaging, compression artifacts, jammer, unusual noises, and voice artefacts. The one or more features may be indicative of characteristics comprising one or more of: a signal-to-noise ratio, a confidence probability map, a quality representation, or a mean opinion score. A conference probability map (Time-Frequency, T-F, map) may indicate the confidence of a denoised signal, for example the reliability of a gain time-frequency, T-F, map. The mean opinion score may be seen as a predicted mean opinion score, such as a predicted mean opinion score quality prediction. For example, the mean opinion score may be determined based on an intrusive method, e.g., by comparing the audio input signal with a reference signal, such as reference audio signal. Alternatively or additionally, the mean opinion score may be determined based on a non-intrusive method, e.g., by performing a blind prediction, such as using a pre-trained neural network dedicated to MOS scores and/or alternative scores estimation.

In one or more example audio devices, the one or more features comprise a direct-to-reverberation ratio (DRR), a coherence-to-diffuse ratio (CDR), a spatial noise coherence, a room impulse response, a noise/speech/jammer level/direction, a transcript of the audio of the audio input signal. The direct-to-reverberation ratio (DRR), coherence-to-diffuse ratio (CDR), spatial noise coherence, room impulse response, and noise/speech/jammer level/direction may be associated with the room and/or location where the transmitter and/or the audio device is located.

In one or more examples or embodiments, the second exit module is configured to predict, based on the first feature, which first predicted layer of the first model layers to exit from when processing the audio input signal. In other words, the second exit module may be configured to predict, based on the one or more features, which first predicted layer of the first model layers to exit from. It may be appreciated that the first predicted layer may be selected from the one or more first intermediate layers or the output layer. For example, the second exit module may be configured to predict which intermediate layer of the one or more first intermediate layers to exit from. The second exit module may be configured to predict the first predicted layer before the audio enhancement module has started the processing of the audio input signal.

In one or more examples or embodiments, the second exit module is configured to output, to the audio enhancement module, an outcome of the prediction of which first predicted layer of the first model layers to exit from when processing the audio input signal. In one or more examples or embodiments, the audio enhancement module is configured to process the audio input signal based on the outcome of the prediction of which first predicted layer of the first model layers to exit from when processing the audio input signal. The outcome may for example be indicative of and/or comprise a predicted layer to exit from, such as the first predicted layer, the second predicted layer, and/or the third predicted layer, and/or a predicted layer output, such as the first predicted layer output, the second predicted layer output, and/or the third predicted layer output. It may be appreciated that the second exit module and the first exit module may have a synergistic effect. The first exit module may for example use a predicted layer predicted by the second exit module and avoid processing the one or more first intermediate layers before the predicted layer. This may be advantageous to reduce the resources used to process the audio input signal.

In one or more examples or embodiments, the second exit module comprises a third neural network. In one or more examples or embodiments, to predict, based on the first feature, which first predicted layer of the first model layers to exit from when processing the audio input signal comprises to predict, based on the first feature, which first predicted layer of the first model layers to exit from when processing the audio input signal using the third neural network.

The second exit module may be configured to predict, based on the first feature, which first predicted layer of the first model layers to exit from when processing the audio input signal by using ML-based methods, e.g., by using the third neural network. The third neural network may comprise third model layers including a third input layer, a plurality of third intermediate layers, and a third output layer.

The plurality of third intermediate layers may be considered as hidden layers (such as hidden features). The plurality of third intermediate layers may include a third primary intermediate layer, a third secondary intermediate layer, a third tertiary intermediate layer etc. The third neural network may be configured to operate according to model, such as a machine learning model, e.g., a second machine learning model. A model as referred to herein (such as the second machine learning model) may be seen as a model and/or a scheme and/or a mechanism and/or a method configured to predict, based on the first feature, which first predicted layer of the first model layers to exit from when processing the audio input signal. In one or more examples or embodiments, the third neural network is a deep neural network, DNN.

In one or more examples or embodiments, the first exit module comprises a second neural network. In one or more examples or embodiments, to determine whether the intermediate layer output satisfies a first criterion comprises to determine whether the intermediate layer output satisfies the first criterion using the second neural network.

The first exit module, such as the second neural network, may be configured for determining whether the intermediate layer output satisfies the first criterion. The first exit module may be configured to determine whether the intermediate layer output satisfies the first criterion by using ML-based methods and/or signal processing-based methods, e.g., by using the second neural network. The second neural network may comprise second model layers including a second input layer, a plurality of second intermediate layers, and a second output layer.

The plurality of second intermediate layers may be considered as hidden layers (such as hidden features). The plurality of second intermediate layers may include a second primary intermediate layer, a second secondary intermediate layer, a second tertiary intermediate layer etc. The second neural network may be configured to operate according to model, such as a machine learning model, e.g., a second machine learning model. A model as referred to herein (such as the second machine learning model) may be seen as a model and/or a scheme and/or a mechanism and/or a method configured to determine whether the intermediate layer output satisfies the first criterion. In one or more examples or embodiments, the second neural network is a deep neural network, DNN.

In one or more examples or embodiments, the first predicted layer is an intermediate layer of the one or more first intermediate layers. In one or more examples or embodiments, the first predicted layer is different from the one or more first intermediate layers. For example, the first predicted layer is the first output layer. In one or more examples or embodiments, the first predicted layer may be the first output layer.

In one or more examples or embodiments, the first predicted layer is configured to provide a first predicted layer output. The first predicted layer may provide an exit possibility as mentioned herein. The first predicted layer output may be seen as a result of the exit possibility provided by the first predicted layer. In one or more examples or embodiments, the first predicted layer output may comprise a mask to apply in the processing of the audio input signal for provision of the audio output signal. For example, the first predicted layer output may comprise a mask for performing a certain task of audio processing, such as removing noise of the audio input signal for provision of a denoised audio output signal. For example, the first predicted layer output may comprise a set of filtering parameters constituting a mask to be applied to the audio input signal for filtering it.

In one or more examples or embodiments, the audio device is configured to determine the audio output signal based on the first predicted layer output. In other words, the audio device may not need to determine whether the first predicted layer output satisfies the first criterion to assess whether the audio output signal shall be determined based on the first predicted layer. The prediction of the first predicted layer may therefore reduce the required processing even further since the audio enhancement module may proceed with the processing of the audio input signal until the first predicted layer without having to assess the performance, quality, and/or efficiency of the intermediate layer outputs. It may be appreciated that in some embodiments, the aspect of prediction of the first predicted layer and the aspect of determination of whether the intermediate layer output satisfies the first criterion may be independent aspects or may be combined aspects. In one or more examples or embodiments, the first predicted layer may be the exact layer for when to exit. Alternatively, the first predicted layer may be the layer for which layer to start determining whether the layer satisfies the first criterion. For example, the second exit module may predict that the intermediate layers before the first predicted layer may not make sense to exit from. In one or more examples or embodiments, the audio enhancement module is configured to determine the audio input signal based on the first predicted layer output, e.g., based on the outcome from the second exit module.

In one or more examples or embodiments, the first exit module and/or the second exit module may be trained under operation, such as on the fly. For example, the second exit module may be configured to perform a verification, such as a sanity check, once in a while, in order to verify that the predicted first predicted layer is the optimal prediction. It may be appreciated that the first exit module may provide a verification of a prediction of the second exit module by verifying an intermediate layer output. The second exit module may for example predict to exit at an earlier or later layer (such as stage) to verify whether an earlier or later layer is more optimal than the first predicted layer. The first exit module may for example exit the first neural network at a later intermediate layer in order to assess the intermediate layer output of the later intermediate layer. The first exit module may thereby determine whether the intermediate layer output of the later intermediate layer provides a noticeable improvement in efficiency, quality, and/or performance in processing of the audio input signal compared to the intermediate layer output satisfying the first criterion. In other words, the first exit module may assess whether a later exit layer than the intermediate layer providing an intermediate layer output satisfying the first criterion may provide an outcome with a significant improvement compared to the outcome of the previous intermediate layer output. Optimal may in this context be understood as having a better quality vs performance/required resource ratio. For example, if by exiting the processing at an earlier layer and thereby saving resources but the output of the layer has almost the same quality, the second exit module may assess that this earlier layer is more optimal. The feedback to the first exit module and/or the second exit module when trained under operation may be provided as an increase or decrease in threshold and/or weighing of a result (such as correction). For example, for the first exit module the training under operation may allow to assess whether further large improvement is possible in the processing by the first neural network (e.g., by adjusting the first criterion, such as threshold, and possibly exiting at a different layer), such as improvement in performance, efficiency, and/or quality. For example, for the second exit module the training under operation may allow to assess whether a different exit layer than a predicted exit layer would provide suitable results as well, e.g., by adjusting the weighing of a prediction.

In one or more examples or embodiments, the first exit module is configured to determine, based on the audio input signal and the intermediate layer output, an intermediate layer of the first model layers at which a performance, a quality, and/or an efficiency of processing of the audio input signal converges. In other words, the first exit module may be configured to determine at which intermediate layer the first neural network hits a point of diminishing returns. A point of diminishing returns and/or a point of convergence may be seen as a point where every additional input (such as additional processing by further intermediate layers) gives a slower improvement in output. In other words, a point of diminishing returns and/or a point of convergence, may be a point where the further processing of the audio input signal will give a slower improvement in output than the previous layers. To determine when a performance, a quality, and/or an efficiency of processing of the audio input signal converges may comprise to determine an improvement of the processing of the audio input signal using the output of a layer of the first neural network and compare the output to one or more previous outputs. If it is determined that the improvement of the processing of the audio input signal using the output of a layer is low, then that layer may be predicted to be the intermediate layer at which a performance, a quality, and/or an efficiency of processing of the audio input signal converges. For example, the first exit module may determine that an output of an intermediate layer provides an improvement compared to the previous output of the previous intermediate layer which is smaller than a certain threshold for improvement. When this happens, the first exit module may determine the intermediate layer at which a performance, a quality, and/or an efficiency of processing of the audio input signal converges (such as where diminishing returns is occurring). The determination of the intermediate layer at which a performance, a quality, and/or an efficiency of processing of the audio input signal converges may be used as feedback to adjust the first criterion (such as threshold) for improving further the performance, a quality, and/or an efficiency of processing of the audio input signal by exiting at an optimal intermediate layer.

In one or more examples or embodiments, the second exit module is configured to obtain one or more audio device parameters including a first audio device parameter. To obtain one or more audio device parameters may comprise to determine one or more audio device parameters based on one or more An audio device parameter may be seen as a parameter indicative of a characteristic of the audio device. An audio device parameter may be seen as a parameter indicative of one or more of: a capability of the audio device, a status of the audio device, and a type of audio device. A capability of the audio device may for example be a processing capability of the audio device. A status of the audio device may for example be a battery status of the audio device and/or a power status of the audio device. A type of audio device may for example be a model of audio device, such as a model of headset or a model of speakerphone. The second exit module may thereby take the audio device itself and its characteristics into account when predicting an exit layer.

In one or more examples or embodiments, the first audio device parameter is a power parameter, a battery parameter, and/or a processing capability parameter, such as a power parameter of the audio device, a battery parameter of the audio device, and/or a processing capability parameter of the audio device. In other words, the one or more audio device parameters may comprise one or more of: a power parameter, a battery parameter, and a processing capability parameter. A power parameter may be seen as a processing power parameter and/or an electrical power of the audio device. A battery parameter may be seen as a battery status of the audio device, an available battery charge, and/or a battery size of the audio device. A processing capability parameter may be seen as a processing capability of the audio device. It may be appreciated that the power parameter, the battery parameter and the processing capability parameter may be interrelated. For example, the processing capability parameter may depend on the power parameter and/or the battery parameter.

In one or more examples or embodiments, the second exit module is configured to predict, based on the first audio device parameter, which second predicted layer of the first model layers to exit from when processing the audio input signal.

The second exit module may be configured to predict which layer, such as which first model layer of the first neural network, will be an optimal layer to exit from when processing the audio input signal. The prediction of a predicted layer (such as the first predicted layer, the second predicted layer, and/or the third predicted layer as disclosed herein) may be based on the one or more features (such as based on a quality of the audio input signal), a prediction of a quality of an output (such as based on a quality of an output of the first predicted layer), a performance of an output of a layer (such as based on a performance of an output of the first predicted layer), user preferences, and/or one or more audio device parameters (such as based on a capability of the audio device).

In other words, the second exit module may be configured to predict, based on the one or more audio device parameters, which second predicted layer of the first model layers to exit from. It may be appreciated that the second predicted layer may be selected from the one or more first intermediate layers or the output layer. For example, the second exit module may be configured to predict which intermediate layer of the one or more first intermediate layers to exit from. The second exit module may be configured to predict the second predicted layer before the audio enhancement module has started the processing of the audio input signal. The second predicted layer may be an intermediate layer of the one or more first intermediate layers. In one or more examples or embodiments, the second predicted layer is different from the one or more first intermediate layers. For example, the second predicted layer is the first output layer. In one or more examples or embodiments, the second predicted layer is the same layer as the first predicted layer and/or the third predicted layer as disclosed herein. In one or more examples or embodiments, the second predicted layer is different from the first predicted layer. It may be appreciated that when the first predicted layer, the second predicted layer, and/or the third predicted layer are different, the audio device may be configured to assess which of the first predicted layer and the second predicted layer is the most optimal in view of the one or more features (such as based on a quality of the audio input signal), a prediction of a quality of an output (such as based on a quality of an output of the first predicted layer), a performance of an output of a layer (such as based on a performance of an output of the first predicted layer), and/or one or more audio device parameters (such as based on a capability of the audio device).

It may be appreciated that in some embodiments, the aspects of prediction of the first predicted layer, the second predicted layer, the third predicted layer, and/or the aspect of determination of whether the intermediate layer output satisfies the first criterion may be independent aspects or may be combined aspects. In one or more examples or embodiments, the first predicted layer may be the exact layer for when to exit. Alternatively, the first predicted layer may be the layer for which layer to start determining whether the layer satisfies the first criterion. For example, the second exit module may predict that the intermediate layers before the first predicted layer may not make sense to exit from.

In one or more examples or embodiments, the second exit module is configured to predict, based on the power parameter, the battery parameter, and/or the processing capability parameter, which second predicted layer of the first neural network to exit from when processing the audio input signal.

In one or more examples or embodiments, the second predicted layer is configured to provide a second predicted layer output.

The second predicted layer may provide an exit possibility as mentioned herein. The second predicted layer output may be seen as a result of the exit possibility provided by the second predicted layer. In one or more examples or embodiments, the second predicted layer output may comprise a mask to apply in the processing of the audio input signal for provision of the audio output signal. For example, the second predicted layer output may comprise a mask for performing a certain task of audio processing, such as removing noise of the audio input signal for provision of a denoised audio output signal. For example, the second predicted layer output may comprise a set of filtering parameters constituting a mask to be applied to the audio input signal for filtering it.

In one or more examples or embodiments, the audio device is configured to determine the audio output signal based on the second predicted layer output. The description relating to the determination of the audio output signal based on the first predicted layer output may also apply to the description of the determination of the audio output signal based on the second predicted layer output. In one or more examples or embodiments, the audio enhancement module is configured to determine the audio input signal based on the second predicted layer output, e.g., based on the outcome from the second exit module.

In one or more examples or embodiments, the second exit module is configured to predict, based on the audio input signal, which third predicted layer of the first model layers at which a performance, a quality, and/or an efficiency of processing of the audio input signal converges. In other words, the second exit module may be configured to predict at which third predicted layer the first neural network hits a point of diminishing returns. A point of diminishing returns and/or a point of convergence may be seen as a point where every additional input gives a slower improvement in output. In other words, a point of diminishing returns and/or a point of convergence, may be a point where the further processing of the audio input signal will give a slower improvement in output than the previous layers. To predict when a performance, a quality, and/or an efficiency of processing of the audio input signal converges may comprise to predict an improvement potential of the processing of the audio input signal using the output of a layer of the first neural network. If it is predicted that the improvement potential of the processing of the audio input signal using the output of a layer is low, then that layer may be predicted to be the third predicted layer. For example, the second exit module may predict that the first neural network will not be able to achieve more than 90% improvement even if the audio enhancement module proceeds with all the layers of the first neural network. Then, the second exit module may predict that a layer achieving between 80-90% of improvement is the third predicted layer where the performance, quality, and/or efficiency of processing of the audio input signal converges. In one or more examples or embodiments, the third predicted layer is configured to provide a third predicted layer output.

In one or more examples or embodiments, the audio device is configured to determine the audio output signal based on the third predicted layer. In other words, to determine the audio output signal based on the third predicted layer may comprise to determine the audio output signal based on the prediction of the layer at which the processing converges. In other words, the audio output signal may not necessarily be determined directly based on the third predicted layer (such as the third predicted layer output), but the third predicted layer may be used to determine which layer (or layer output) to determine the audio output signal from. In one or more examples or embodiments, the audio enhancement module is configured to determine the audio input signal based on the third predicted layer, e.g., based on the outcome from the second exit module.

In one or more examples or embodiments, the audio device is configured to determine the audio output signal based on an output of the layer before the third predicted layer. It may be appreciated that if layer M is the third predicted layer, the audio device, such as the audio enhancement module, may be configured to exit the first neural network at layer M-1, M-2, or M-5 for example. In one or more examples or embodiments, the audio enhancement module is configured to determine the audio input signal based on an output of the layer before the third predicted layer, e.g., based on the outcome from the second exit module.

In one or more examples or embodiments, to determine the audio output signal based on the third predicted layer (such as based on the prediction of the layer at which the processing converges) comprises to determine, based on the third predicted layer, which layer of the first neural network to exit from when processing the audio input signal. In some embodiments, this predicted layer to exit from may be seen as different from the third predicted layer, as also shown in the example above.

In one or more examples or embodiments, the third predicted layer is configured to provide a third predicted layer output. In one or more examples or embodiments, the audio device is configured to determine the audio output signal based on the third predicted layer output. The third predicted layer output may be seen as a result of the exit possibility provided by the third predicted layer. In one or more examples or embodiments, the third predicted layer output may comprise a mask to apply in the processing of the audio input signal for provision of the audio output signal. For example, the third predicted layer output may comprise a mask for performing a certain task of audio processing, such as removing noise of the audio input signal for provision of a denoised audio output signal. For example, the third predicted layer output may comprise a set of filtering parameters constituting a mask to be applied to the audio input signal for filtering it.

The description relating to the determination of the audio output signal based on the first predicted layer output may also apply to the description of the determination of the audio output signal based on the third predicted layer output.

In one or more examples or embodiments, the audio device, such as the second exit module, may be configured to predict a minimum layer at which the audio enhancement module can exit the processing using the first neural network in order to provide an acceptable audio output signal. In other words, the audio device, such as the second exit module, may be configured to predict a minimum layer at which the audio enhancement module can exit the processing using the first neural network in order to have performed at least to some extent a certain audio processing task.

Based on as described herein may be seen as "a function of" and/or "used as an input to". For example, the audio output signal may be a function of the intermediate layer output, the first predicted layer output, the second predicted layer output, and/or the third predicted layer output. The intermediate layer output, the first predicted layer output, the second predicted layer output, and/or the third predicted layer output may be used as an input to determine the audio output signal.

In one or more examples or embodiments, the audio device, such as the second exit module, is configured to determine an uncertainty parameter of a predicted layer, such as an uncertainty parameter of the first predicted layer, the second predicted layer, and/or the third predicted layer, based on the audio input signal.

For example, the audio device may be configured to determine an uncertainty parameter based on one or more characteristics of the audio data, such as audio input signal, as described herein. In one or more examples or embodiments, the audio device may be configured to determine an uncertainty parameter based on one or more features, user preferences, and/or the one or more audio parameters as disclosed herein. In other words, the audio device is configured to determine an uncertainty parameter indicative of an uncertainty in estimating a predicted layer. The uncertainty parameter may be indicative of an estimate of the quality of the outcome of the processing of the audio input signal based on a given layer output, such as an estimate of the quality of the audio output signal. For example, the uncertainty parameter may be indicative of an estimate of the quality of the outcome of the processing of the audio input signal by the audio enhancement module as disclosed herein. The uncertainty parameter may be seen as a prediction of processing quality of the audio input signal by the audio device based on a given predicted layer output. The uncertainty parameter may be seen as an estimate of how confident the audio device is on the processing quality when using the audio enhancement module for a given input, e.g., for given audio input signal.

In one or more example audio devices, the one or more processors comprise a digital signal processor. In one or more examples or embodiments, the audio enhancement module as disclosed herein forms part of the digital signal processor.

In one or more example audio devices, a model as referred to herein may be stored on a non-transitory storage medium (for example, on the memory of the audio device). The model may be stored on a non-transitory storage medium of the audio device being configured to execute the model. In one or more example audio devices, the model may comprise model data and or computer readable instructions (for example based on the audio input signal and/or a layer output, such as the intermediate layer output, the first predicted layer, the second predicted layer, and/or the third predicted layer, as disclosed herein). The model data and/or the computer readable instructions may be used by the audio device. The model (such as model data and/or the computer readable instructions) may be used by the audio device to process the audio data, such as the audio input signal.

For example, the digital signal processor may comprise a denoiser and/or an echo controller, such as a deep noise reduction, DNS, denoiser configured to operate according to a neural network, NN, such as a DNN.

In one or more example audio devices, the one or more processors are configured to output the audio output signal, such as audio output, via the interface. In other words, the audio device may be configured to output the audio output signal via the wired and/or wireless interface such as to a far-end, and/or via the one or more speakers (such as receivers) at the near-end on the audio device itself.

A method of operating an audio device, such as an audio device configured to act as a receiver device, is disclosed. The method comprises obtaining, such as via an interface and/or using one or more processors of the audio device, audio data. The method comprises processing, such as using one or more processors of the audio device, the audio data for provision of an audio output. The method comprises determining, such as using the one or more processors of the audio device, an uncertainty parameter based on the audio data. The method comprises controlling, such as using one or more processors of the audio device, the processing of the audio data for provision of the audio output based on the uncertainty parameter.

In one or more examples or embodiments, the method comprises processing, such as using one or more processors of the audio device, the audio data for provision of one or more audio parameters indicative of one or more characteristics of the audio data. In one or more examples or embodiments, the method comprises mapping, such as using one or more processors of the audio device, the one or more audio parameters to a first latent space of a first neural network for provision of a mapping parameter indicative of whether the one or more audio parameters belong to a training manifold of the first latent space. In one or more examples or embodiments, the method comprises determining, such as using one or more processors of the audio device, based on the mapping parameter, an uncertainty parameter indicative of an uncertainty of processing quality.

It is to be understood that a description of a feature in relation to the audio device is also applicable to the corresponding feature in the method(s) of operating an audio device as disclosed herein and vice versa.

A computer-implemented method for training the first neural network as disclosed herein is disclosed. The method comprises obtaining an audio dataset comprising one or more audio signals. The method comprises training, based on the audio dataset, the first neural network to perform an audio processing task at at least one of the first intermediate layers of the first neural network for provision of a first intermediate layer having an exit possibility for provision of an intermediate layer output. In other words, the method may comprise training the audio enhancement module as disclosed herein to perform an audio processing task at each predefined potential exit stage, such as exit possibility.

In one or more examples or embodiments, the method comprises training the second exit module as disclosed herein to predict one or more of: the first predicted layer, the second predicted layer, and the third predicted layer as disclosed herein. In other words, the method may comprise training of the second exit module to pick an optimal exit for the first neural network, such as for the audio enhancement module. It may be appreciated that a cost function for the training of the second exit module may be a combination of audio quality versus computations (such as computational cost).

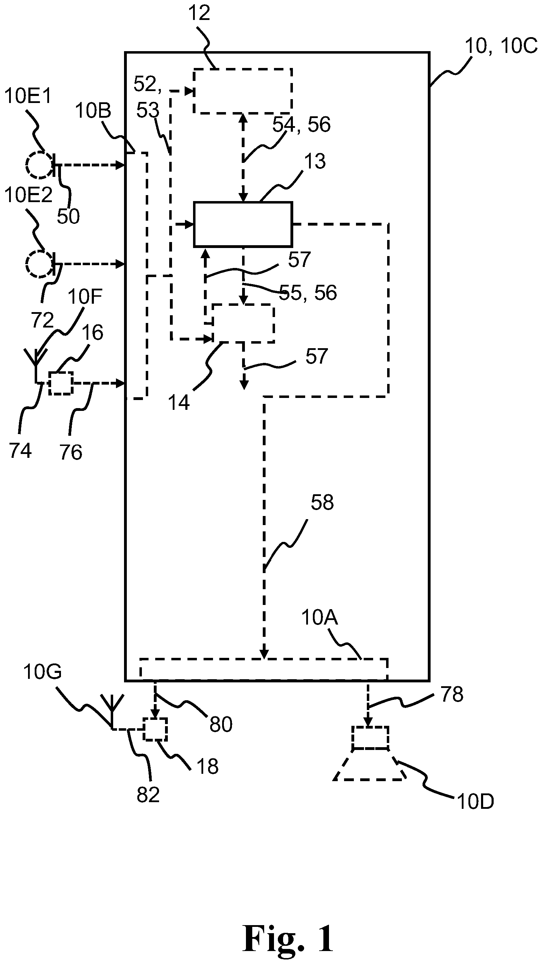

Fig. 1 schematically illustrates an example audio device , such as an audio device 10 according to the present disclosure. The audio device 10 may be seen as an audio communication device. The audio device 10 may be seen as a communication device for performing calls, such as audio and/or video calls. The audio device 10 may be seen as an audio device for enabling efficient neural network processing, such as for enabling efficient dynamic neural network processing.

The audio device 10 may be configured to act as a receiver device and/or a transmitter device. In other words, the audio device 10 may be configured to receive input signals from other audio devices configured to act as transmitter devices and/or configured to transmit output signals to other audio devices. The audio device 10 comprises an interface and a memory, (not shown). Optionally, the audio device 10 comprises an audio speaker 10D, and one or more microphones, such as a first microphone 10E1 and a second microphone 10E2. Optionally, the audio device 10 comprises one or more transceivers, such as a first wireless transceiver 10F. The audio device 10 may be seen as an audio device configured to obtain audio signals, output audio signals, and process audio signals. The audio device 10 may be seen as a conference audio device, e.g., configured to be used by a party (such as one or more users at a near-end) to communicate with one or more other parties (such as one or more users at a far-end). The audio device 10 may be seen as a smart audio device. The audio device 10 may be used for communication, conference, and/or a meeting between two or more parties being remote from each other. The audio device 10 may be used by one or more users in a vicinity of where the audio device 10 is located, also referred to as a near-end. In the present examples, the receiver end may be seen as the near-end and the transmitter end may be seen as the far-end.

The audio device 10 comprises one or more processors 10C. The one or more processors 10C may be configured to obtain audio data, such as audio input signals. The audio device 10 may be configured to obtain, such as using the one or more processors 10C and/or via an input interface 10B, a first microphone input signal 50 from the first microphone 10E1, a second microphone input signal 72 from the second microphone 10E2, and/or a transceiver input signal 74 from the first transceiver. The first microphone input signal 50, the second microphone input signal 72, and/or the transceiver input signal 74 may be seen as input signals. In one or more example audio devices, the transceiver input signal 74 may be obtained via a first transceiver interface 16, e.g., as a transceiver interface input signal, and forwarded to the input interface 10B as a transceiver interface output 76. In one or more example audio devices, the audio device 10 is configured to obtain the input signal(s), such as the transceiver input signal 74, from a far-end, such as a far-end party or user(s). It may be appreciated that the input signal(s) comprises audio. In one or more embodiments or examples, the input signal(s), such as the transceiver input signal 74, has undergone signal processing, such as encoding, compression, and/or enhancement. The transceiver input signal 74 may be indicative of an audio signal generated by user(s) at the far-end. In other words, the transceiver input signal 74 may be indicative of speech, such as speech from a far-end transmitter device. The input signal(s) may be indicative of audio, such as speech, from the near-end when obtained from the first microphone 10E1 and/or the second microphone 10E2. The audio data may be based on the input signal(s), such as based on the first microphone input signal 50, the second microphone input signal 72, and/or the transceiver input signal 74. The input interface 10B may be configured to provide an input interface output 52 based on the first microphone input signal 50, the second microphone input signal 72, and/or the transceiver input signal 74. The audio data, such as audio input signal 53, may be based on the input interface output 52.

The audio device 10 is configured to process, such as using the one or more processors 10C, the audio data, such as audio input signal 53, for provision of an audio output. In other words, the audio device 10 may be configured to process the first microphone input signal 50, the second microphone input signal 72, the transceiver input signal 74, and/or the input interface output 52 for provision of the audio output. The audio device 10 may comprise an output interface 10A configured to output the audio output, such as audio output signal 58. For example, the audio device 10 may be configured to output the audio output signal via the output interface 10A to the audio speaker 10D as an audio speaker input 78. The audio speaker 10D may be configured to output the audio output based on the audio speaker input 78, e.g., to output the audio output at the near-end. For example, the audio device 10 may be configured to output the audio output signal via the output interface 10A to the second wireless transceiver 10G as a second transceiver input 80. The second wireless transceiver 10G may be configured to output the audio output based on the second transceiver input 80, e.g., to output the audio output signal to the far-end. In one or more example audio devices, the second transceiver input 80 may be outputted via a second transceiver interface 18, e.g., as a second transceiver interface input signal, and forwarded to the second wireless transceiver interface 10G as a second transceiver output 82. It may be appreciated that the audio output may be based on and/or comprise the audio speaker input 78 and/or the second transceiver input 80.

The audio device 10, such as the one or more processors 10C, comprises an audio enhancement module 13 comprising a first neural network with first model layers including a first input layer, a plurality of first intermediate layers, and a first output layer.

In one or more example audio devices, the one or more processors 10C comprise a digital signal processor. In one or more examples or embodiments, the audio enhancement module 13 as disclosed herein comprises the digital signal processor.

In one or more examples or embodiments, the audio device 10, such as the one or more processors 10C, comprises a first exit module 14.

The audio enhancement module 13 is configured to process an audio input signal 53 for provision of an audio output signal 58 using the first neural network. In one or more examples or embodiments, at least one of the first intermediate layers has an exit possibility for providing an intermediate layer output. The audio enhancement module 13 may be configured to output 55 the intermediate layer output 56 to the first exit module 14. In one or more examples or embodiments, the first exit module 14 is configured to determine whether the intermediate layer output 56 satisfies a first criterion, wherein the first criterion is indicative of a performance, a quality, and/or an efficiency of the intermediate layer output 56. In one or more examples or embodiments, in accordance with the intermediate layer output 56 satisfying the first criterion, the audio device 10 is configured to determine, such as using the audio enhancement module 13, the audio output signal 58 based on the intermediate layer output 56.

In one or more examples or embodiments, the first exit module 14 is configured to output, to the audio enhancement module 13, an outcome 57 of the determination of whether the intermediate layer output 56 satisfies the first criterion. In one or more examples or embodiments, the audio enhancement module 13 is configured to process the audio input signal 53 based on the outcome 57 of the determination of whether the intermediate layer output 56 satisfies the first criterion. In one or more examples or embodiments, the first exit module 14 may be configured to output 57 the intermediate layer output, such as output 57 the intermediate layer output to a digital signal processor (not shown) of the audio device 10. In one or more examples or embodiments, the first exit module 14 may be comprised by or form part of the audio enhancement module 13.

In one or more examples or embodiments, the audio device 10 comprises a second exit module 12 configured to obtain one or more features of the audio input signal 53 including a first feature. In one or more examples or embodiments, the second exit module 12 is configured to obtain the audio input signal 53, e.g., via the input interface 10B.

In one or more examples or embodiments, the second exit module 12 is configured to predict, based on the first feature, which first predicted layer of the first model layers to exit from when processing the audio input signal 53, e.g., when the audio enhancement module 13 processes the audio input signal 53. In one or more examples or embodiments, the second exit module 12 is configured to output, to the audio enhancement module 13, an outcome 54 of the prediction of which first predicted layer of the first model layers to exit from when processing the audio input signal 53. In one or more examples or embodiments, the audio enhancement module 13 is configured to process the audio input signal 53 based on the outcome 54 of the prediction of which first predicted layer of the first model layers to exit from when processing the audio input signal 53. The outcome may for example be indicative of and/or comprise a predicted layer to exit from, such as the first predicted layer, the second predicted layer, and/or the third predicted layer, and/or a predicted layer output, such as the first predicted layer output, the second predicted layer output, and/or the third predicted layer output.

In one or more examples or embodiments, the first predicted layer is an intermediate layer of the one or more first intermediate layers.

In one or more examples or embodiments, the first predicted layer is configured to provide a first predicted layer output.

In one or more examples or embodiments, the audio device 10 is configured to determine the audio output signal 58 based on the first predicted layer output.

In one or more examples or embodiments, the first exit module 14 comprises a second neural network. In one or more examples or embodiments, to determine whether the intermediate layer output 56 satisfies a first criterion comprises to determine whether the intermediate layer output 56 satisfies the first criterion using the second neural network. In one or more examples or embodiments, the audio enhancement module 13 is configured to output the intermediate layer output 56 to the second exit module 12.

In one or more examples or embodiments, the second exit module 12 is configured to obtain one or more audio device parameters including a first audio device parameter. The second exit module 12 may be configured to obtain the one or more audio device parameters from the audio device 10, such as from a memory (not shown) of the audio device 10. In one or more examples or embodiments, the first audio device parameter is a power parameter, a battery parameter, and/or a processing capability parameter, such as a power parameter of the audio device, a battery parameter of the audio device, and/or a processing capability parameter of the audio device. In one or more examples or embodiments, the second exit module 12 is configured to predict, based on the first audio device parameter, which second predicted layer of the first model layers to exit from when processing the audio input signal 53.

In one or more examples or embodiments, the second exit module 12 is configured to predict, based on the power parameter, the battery parameter, and/or the processing capability parameter, which second predicted layer of the first neural network to exit from when processing the audio input signal 53. The prediction may be indicated and/or comprised in the outcome 54 to the audio enhancement module 13.

In one or more examples or embodiments, the second predicted layer is configured to provide a second predicted layer output. The second predicted layer output may be indicated and/or comprised in the outcome 54.

In one or more examples or embodiments, the audio device 10 is configured to determine the audio output signal 58 based on the second predicted layer output. In one or more examples or embodiments, the audio enhancement module 13 is configured to determine the audio input signal 58 based on the second predicted layer output., e.g., based on the outcome 54 from the second exit module 12.

In one or more examples or embodiments, the second exit module 12 is configured to predict, based on the audio input signal 53, which third predicted layer of the first model layers at which a performance, a quality, and/or an efficiency of processing of the audio input signal 53 converges, such as when the processing of the audio input signal 53 by the audio enhancement module 13 converges.

In one or more examples or embodiments, the audio device 10 is configured to determine the audio output signal 58 based on the third predicted layer. In one or more examples or embodiments, the audio enhancement module 13 is configured to determine the audio input signal 58 based on the third predicted layer, e.g., based on the outcome 54 from the second exit module 12.

In one or more examples or embodiments, the audio device 10 is configured to determine the audio output signal 53 based on an output of the layer before the third predicted layer. In one or more examples or embodiments, the audio enhancement module 13 is configured to determine the audio input signal 58 based on an output of the layer before the third predicted layer, e.g., based on the outcome 54 from the second exit module 12.

In one or more examples or embodiments, to determine the audio output signal 53 based on the third predicted layer (such as based on the prediction) comprises to determine, based on the third predicted layer, which layer of the first neural network to exit from when processing the audio input signal 53.

In one or more examples or embodiments, the third predicted layer is configured to provide a third predicted layer output. In one or more examples or embodiments, the audio device 10 is configured to determine the audio output signal based on the third predicted layer output. In one or more examples or embodiments, the audio enhancement module 13 is configured to determine the audio input signal 58 based on the third predicted layer output, e.g., based on the outcome 54 from the second exit module 12.

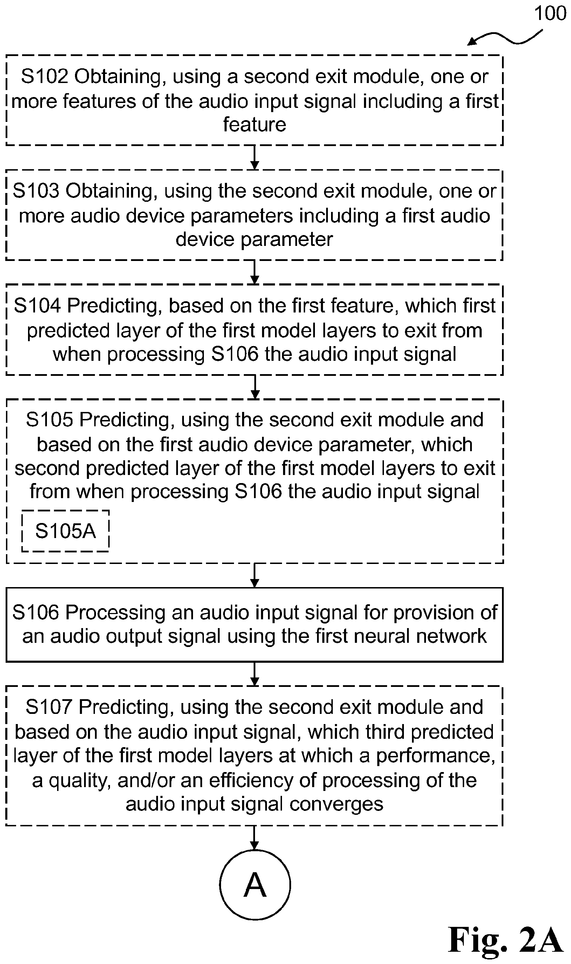

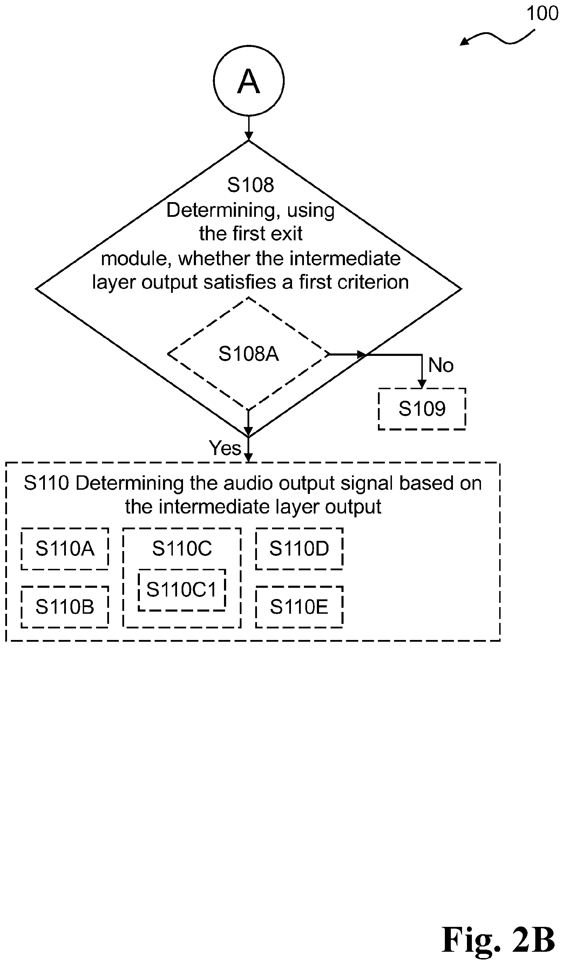

The audio device 10 may be configured to perform any of the methods disclosed in Figs. 2A-2B.

The operations of the audio device 10 may be embodied in the form of executable logic routines (for example, lines of code, software programs, etc.) that are stored on a non-transitory computer readable medium (for example, memory) and are executed by the one or more processors 10C).

Furthermore, the operations of the audio device 10 may be considered a method that the audio device 10 is configured to carry out. Also, while the described functions and operations may be implemented in software, such functionality may as well be carried out via dedicated hardware or firmware, or some combination of hardware, firmware and/or software.

Memory of the audio device may be one or more of a buffer, a flash memory, a hard drive, a removable media, a volatile memory, a non-volatile memory, a random access memory (RAM), or other suitable device. In a typical arrangement, memory may include a non-volatile memory for long term data storage and a volatile memory that functions as system memory for the processor 10C. The memory may exchange data with the processor 10C over a data bus. Control lines and an address bus between the memory and the processor 10C also may be present (not shown in Fig. 1). The memory is considered a non-transitory computer readable medium.

The memory may be configured to store information such as training audio data, audio data, neural networks and models (such as neural network parameters and model parameters), and audio device parameters as disclosed herein in a part of the memory.

Figs. 2A-2B show a flow diagram of an example method, such as a method 100.

A method 100 performed by an audio device is disclosed, such as a method of operating an audio device as disclosed herein. The method 100 may be for enabling efficient neural network processing. In one or more examples or embodiments, the audio device comprises an audio enhancement module comprising a first neural network with first model layers including a first input layer, a plurality of first intermediate model layers, and a first output layer; and a first exit module. The method 100 comprises processing S106 an audio input signal for provision of an audio output signal using the first neural network. At least one of the first intermediate layers has an exit possibility for providing an intermediate layer output.

In one or more examples or embodiments, the method 100 comprises determining S108, using the first exit module, whether the intermediate layer output satisfies a first criterion. In one or more examples or embodiments, the first criterion is indicative of a performance, a quality, and/or an efficiency of an intermediate layer output.

In one or more example methods, determining S108 whether the intermediate layer output satisfies a first criterion comprises determining S108A whether the intermediate layer output satisfies the first criterion using the second neural network.

In one or more examples or embodiments, the method 100 comprises, in accordance with the intermediate layer output satisfying the first criterion, determining S110 the audio output signal based on the intermediate layer output.

In one or more examples or embodiments, the method 100 comprises, in accordance with the intermediate layer output not satisfying the first criterion, proceeding S109 the processing with a next layer of the first neural network., such as a next intermediate layer.

In one or more example methods, the method 100 comprises obtaining S102, using a second exit module, one or more features of the audio input signal including a first feature.

In one or more example methods, the method 100 comprises predicting S104, based on the first feature, which first predicted layer of the first model layers to exit from when processing S106 the audio input signal.

In one or more example methods, the first predicted layer is configured to provide a first predicted layer output. In one or more examples or embodiments, the method 100 comprises determining a first predicted layer output based on the first predicted layer In one or more example methods, the method 100 comprises determining S110A the audio output signal based on the first predicted layer output.

In one or more example methods, the method 100 comprises obtaining S103, using the second exit module, one or more audio device parameters including a first audio device parameter.

In one or more example methods, the method 100 comprises predicting S105, using the second exit module and based on the first audio device parameter, which second predicted layer of the first model layers to exit from when processing S106 the audio input signal.

In one or more example methods, the second predicted layer is configured to provide a second predicted layer output.

In one or more example methods, the method 100 comprises determining S110B the audio output signal based on the second predicted layer output.

In one or more example methods, predicting S105 which second predicted layer of the first model layers to exit from comprises predicting S105A, based on the power parameter, the battery parameter, and/or the processing capability parameter, which second predicted layer of the first neural network to exit from when processing the audio input signal.

In one or more example methods, the method 100 comprises predicting S107, using the second exit module and based on the audio input signal, which third predicted layer of the first model layers at which a performance, a quality, and/or an efficiency of processing of the audio input signal converges.

In one or more example methods, the method 100 comprises determining S110C the audio output signal based on the third predicted layer.

In one or more example methods, determining S110C the audio output signal comprises determining S110C1, based on the third predicted layer, which layer of the first model layers to exit from when processing the audio input signal.

In one or more example methods, the third predicted layer is configured to provide a third predicted layer output.

In one or more example methods, the method 100 comprises determining S110D the audio output signal based on the third predicted layer output.

In one or more example methods, the method 100 comprises determining S110E the audio output signal based on an output of the layer before the third predicted layer In one or more example methods, the first exit module comprises a second neural network.

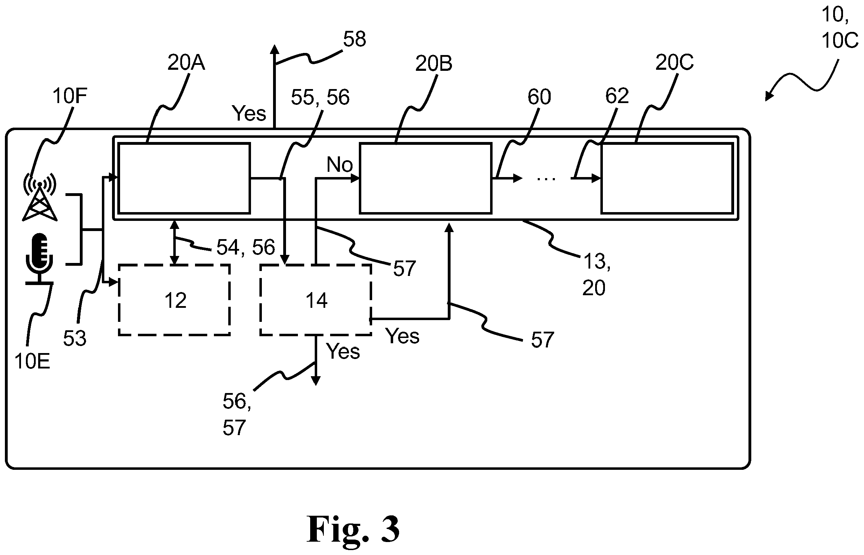

Fig. 3 schematically illustrates an example audio device, such as an audio device 10 according to the present disclosure, where a technique as disclosed herein is applied.

Optionally, the audio device 10 comprises one or more microphones 10E. Optionally, the audio device 10 comprises one or more transceivers, such as a first wireless transceiver 10F.

The audio device 10 comprises one or more processors 10C. The one or more processors 10C may be configured to obtain audio data, such as audio input signals 53.

The audio device 10 is configured to process, such as using the one or more processors 10C, the audio data, such as audio input signal 53, for provision of an audio output, such as an audio output signal 58.

The audio device 10, such as the one or more processors 10C, comprises an audio enhancement module 13 comprising a first neural network 20 with first model layers including a first input layer (not shown), a plurality of first intermediate layers (20A, 20B), and a first output layer 20C. In one or more examples or embodiments, the first input layer may be the intermediate layer 20A. The first neural network 20, such as the first model layers, may comprise a first tertiary intermediate layer, a first quaternary intermediate layer, a first quinary intermediate layer, etc.

In one or more example audio devices, the one or more processors 10C comprise a digital signal processor. In one or more examples or embodiments, the audio enhancement module 13 as disclosed herein comprises the digital signal processor.

In one or more examples or embodiments, the audio device 10, such as the one or more processors 10C, comprises a first exit module 14.

The audio enhancement module 13 is configured to process an audio input signal 53 for provision of an audio output signal 58 using the first neural network 20. In one or more examples or embodiments, at least one of the first intermediate layers has an exit possibility for providing an intermediate layer output 56. In the example of Fig. 3, a first primary intermediate layer 20A has an exit possibility for providing a first primary intermediate layer output 56. The first primary intermediate layer output 56 may be seen as the intermediate layer output as disclosed herein. The audio enhancement module 13 may be configured to output 55 the intermediate layer output 56 (such as first primary intermediate layer output 56) to the first exit module 14. In one or more examples or embodiments, the first exit module 14 is configured to determine whether the intermediate layer output 56 (such as first primary intermediate layer output 56) satisfies a first criterion, wherein the first criterion is indicative of a performance, a quality, and/or an efficiency of the intermediate layer output 56 (such as first primary intermediate layer output 56). In one or more examples or embodiments, in accordance with the intermediate layer output 56 satisfying the first criterion, the audio device 10 is configured to determine, such as using the audio enhancement module 13, the audio output signal 58 based on the intermediate layer output 56.

In one or more examples or embodiments, the first exit module 14 is configured to output, to the audio enhancement module 13, an outcome 57 of the determination of whether the intermediate layer output 56 satisfies the first criterion. In one or more examples or embodiments, the audio enhancement module 13 is configured to process the audio input signal 53 based on the outcome 57 of the determination of whether the intermediate layer output 56 satisfies the first criterion. For example, in accordance with the intermediate layer output 56 satisfying the first criterion, the first exit module 14 may be configured to confirm to the audio enhancement module 13, e.g., in the outcome 57, that the intermediate layer output 56 can be used to process the audio input signal 53. The outcome 57 may for example comprise instructions of how to process the audio input signal 53. For example, in accordance with the intermediate layer output 56 not satisfying the first criterion, the first exit module 14 may be configured to instruct the audio enhancement module 13 to proceed to a next layer of the first neural network 20, such as proceed to a first secondary intermediate layer 20B of the first neural network 20. The outcome 57 may for example comprise instructions of proceeding with the first secondary intermediate layer 20B of the first neural network 20. In one or more examples or embodiments, in accordance with the intermediate layer output 56 not satisfying the first criterion, the first exit module 14 may be configured to instruct the audio enhancement module 13 to proceed 60 to a next layer of the first neural network 20, such as proceed 62 to the output layer 20C of the first neural network 20. In one or more examples or embodiments, the first exit module 14 may be configured to output 57 the intermediate layer output, such as output 57 the intermediate layer output to a digital signal processor (not shown) of the audio device 10.

In one or more examples or embodiments, the audio device 10 comprises a second exit module 12 configured to obtain one or more features of the audio input signal 53 including a first feature.

In one or more examples or embodiments, the second exit module 12 is configured to predict, based on the first feature, which first predicted layer of the first model layers to exit from when processing the audio input signal 53, e.g., when the audio enhancement module 13 processes the audio input signal 53. In one or more examples or embodiments, the second exit module 12 is configured to output, to the audio enhancement module 13, an outcome 54 of the prediction of which first predicted layer of the first model layers to exit from when processing the audio input signal 53. In one or more examples or embodiments, the audio enhancement module 13 is configured to process the audio input signal 53 based on the outcome 54 of the prediction of which first predicted layer of the first model layers to exit from when processing the audio input signal 53. The outcome may for example be indicative of and/or comprise a predicted layer to exit from, such as the first predicted layer, the second predicted layer, and/or the third predicted layer, and/or a predicted layer output, such as the first predicted layer output, the second predicted layer output, and/or the third predicted layer output. It may be appreciated that the first predicted layer, the second predicted layer, and/or the third predicted layer may for example be the first primary intermediate layer 20A, the first secondary intermediate layer 20B, and/or the first output layer 20C.

In one or more examples or embodiments, the first predicted layer is an intermediate layer of the one or more first intermediate layers, such as the first primary intermediate layer 20A and/or the first secondary intermediate layer 20B.

In one or more examples or embodiments, the first predicted layer is configured to provide a first predicted layer output.

In one or more examples or embodiments, the audio device 10 is configured to determine the audio output signal 58 based on the first predicted layer output. In one or more examples or embodiments, the first predicted layer output may be the intermediate layer output 56, such as first primary intermediate layer output 56.

In one or more examples or embodiments, the first exit module 14 comprises a second neural network. In one or more examples or embodiments, to determine whether the intermediate layer output 56 satisfies a first criterion comprises to determine whether the intermediate layer output 56 satisfies the first criterion using the second neural network. In one or more examples or embodiments, the audio enhancement module 13 is configured to output the intermediate layer output 56 to the second exit module 12.

In one or more examples or embodiments, the second exit module 12 is configured to obtain one or more audio device parameters including a first audio device parameter. The second exit module 12 may be configured to obtain the one or more audio device parameters from the audio device 10, such as from a memory (not shown) of the audio device 10. In one or more examples or embodiments, the first audio device parameter is a power parameter, a battery parameter, and/or a processing capability parameter, such as a power parameter of the audio device, a battery parameter of the audio device, and/or a processing capability parameter of the audio device 10. In one or more examples or embodiments, the second exit module 12 is configured to predict, based on the first audio device parameter, which second predicted layer of the first model layers to exit from when processing the audio input signal 53.

In one or more examples or embodiments, the second exit module 12 is configured to predict, based on the power parameter, the battery parameter, and/or the processing capability parameter, which second predicted layer of the first neural network 20 to exit from when processing the audio input signal 53. The prediction may be indicated and/or comprised in the outcome 54 to the audio enhancement module 13.

In one or more examples or embodiments, the second predicted layer is configured to provide a second predicted layer output. The second predicted layer output may be indicated and/or comprised in the outcome 54.

In one or more examples or embodiments, the audio device 10 is configured to determine the audio output signal 58 based on the second predicted layer output. In one or more examples or embodiments, the audio enhancement module 13 is configured to determine the audio input signal 58 based on the second predicted layer output., e.g., based on the outcome 54 from the second exit module 12.

In one or more examples or embodiments, the second exit module 12 is configured to predict, based on the audio input signal 53, which third predicted layer of the first model layers at which a performance, a quality, and/or an efficiency of processing of the audio input signal 53 converges, such as when the processing of the audio input signal 53 by the audio enhancement module 13 converges.

In one or more examples or embodiments, the audio device 10 is configured to determine the audio output signal 58 based on the third predicted layer. In one or more examples or embodiments, the audio enhancement module 13 is configured to determine the audio input signal 58 based on the third predicted layer, e.g., based on the outcome 54 from the second exit module 12.

In one or more examples or embodiments, the audio device 10 is configured to determine the audio output signal 53 based on an output of the layer before the third predicted layer. In one or more examples or embodiments, the audio enhancement module 13 is configured to determine the audio input signal 58 based on an output of the layer before the third predicted layer, e.g., based on the outcome 54 from the second exit module 12.

In one or more examples or embodiments, to determine the audio output signal 53 based on the third predicted layer (such as based on the prediction) comprises to determine, based on the third predicted layer, which layer of the first neural network 20 to exit from when processing the audio input signal 53.

In one or more examples or embodiments, the third predicted layer is configured to provide a third predicted layer output. In one or more examples or embodiments, the audio device 10 is configured to determine the audio output signal based on the third predicted layer output. In one or more examples or embodiments, the audio enhancement module 13 is configured to determine the audio input signal 58 based on the third predicted layer output, e.g., based on the outcome 54 from the second exit module 12.

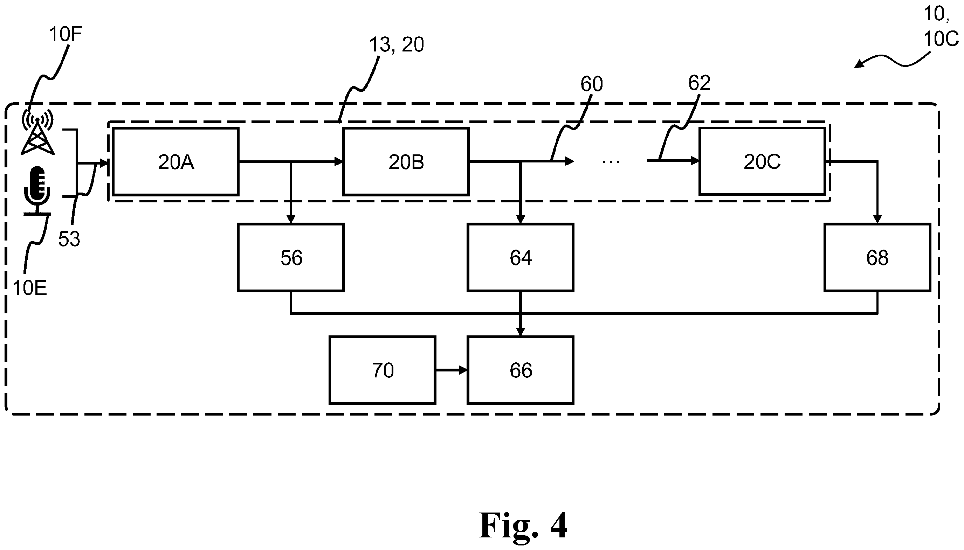

Fig. 4 schematically illustrates an example audio device, such as an audio device 10 according to the present disclosure, where a technique as disclosed herein is applied. Fig. 4 shows a first example of a computer implemented method for training a first neural network as disclosed herein, such as a first example of a computer implemented method as disclosed herein. Fig. 4 may illustrate the training of the audio device 10 of Fig. 3, such as of the audio enhancement module 13 and the first neural network of Fig. 3.

The audio device 10, such as the one or more processors 10C, comprises an audio enhancement module 13 comprising a first neural network 20 with first model layers including a first input layer (not shown), a plurality of first intermediate layers (20A, 20B), and a first output layer 20C. In one or more examples or embodiments, the first input layer may be the intermediate layer 20A. The first neural network 20, such as the first model layers, may comprise a first tertiary intermediate layer, a first quaternary intermediate layer, a first quinary intermediate layer, etc.

The audio enhancement module 13 is configured to process an audio input signal 53 for provision of an audio output signal using the first neural network 20. In one or more examples or embodiments, at least one of the first intermediate layers has an exit possibility for providing an intermediate layer output. In the example of Fig. 4, a first primary intermediate layer 20A provides a first primary intermediate layer output 56 (which may become an exit possibility when the first neural network has been trained), a first secondary intermediate layer 20B provides a first secondary intermediate layer output 64 (which may become an exit possibility when the first neural network has been trained), and the first output layer 20C provides a first output layer output 68 (which may become an exit possibility when the first neural network has been trained). The arrows 60 and 62 illustrate the intermediate layers between the first secondary intermediate layer 20B and the first output layer 20C.

The method for training the first neural network comprises obtaining an audio dataset comprising one or more audio signals 53. The one or more audio signals 53 may be obtained via one or more microphones 10E and/or via a first wireless transceiver 10F. In one or more examples or embodiments, the one or more audio signals may be obtained from a database and/or a memory of the audio device 10. The method comprises training, based on the audio dataset (such as based on the one or more audio signals 53), the first neural network to perform an audio processing task at at least one of the first intermediate layers of the first neural network for provision of a first intermediate layer having an exit possibility for provision of an intermediate layer output. In the example of Fig. 4, the method comprises training, based on the audio dataset (such as based on the one or more audio signals 53), the first neural network to perform an audio processing task at each of the first intermediate layers of the first neural network for provision of first intermediate layers each having an exit possibility for provision of an intermediate layer output. In other words, the method may comprise training the audio enhancement module as disclosed herein to perform an audio processing task at each predefined potential exit stage, such as exit possibility. The example of Fig. 4 shows a first example of a computer implemented method for training the first neural network as disclosed herein, namely a global training of the first neural network. Global training may be seen as the entire dynamic model is trained end-to-end. In other words, all the layers and their parameters are updated simultaneously during the training process. This training method may be advantageous for tasks where the relationship between the input and the output are relatively simple. As may be observed in Fig. 4, the layer outputs of the first model layers of the first neural network are output together to determine a loss function 66. The loss function 66 is determined based on the outputs from the first model layers and based on clean audio signals 70. The first neural network may thereby be trained globally by repeating this process.

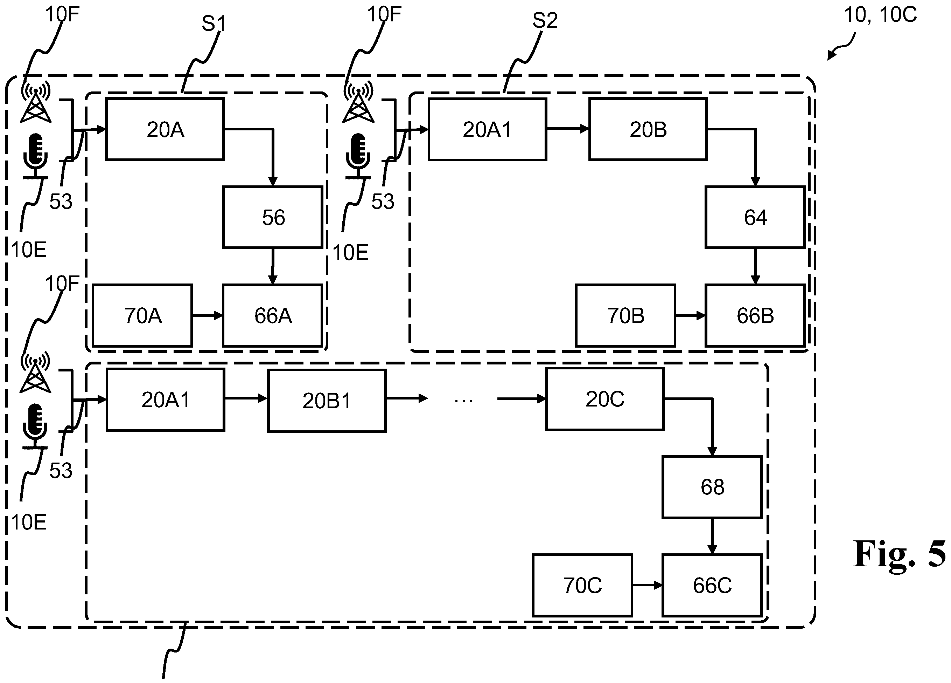

Fig. 5 schematically illustrates an example audio device, such as an audio device 10 according to the present disclosure, where a technique as disclosed herein is applied. Fig. 5 shows a second example of a computer implemented method for training a first neural network as disclosed herein, such as a second example of a computer implemented method as disclosed herein. Fig. 5 may illustrate the training of the audio device 10 of Fig. 3, such as of the audio enhancement module 13 and the first neural network of Fig. 3.

The example of Fig. 5 shows a first example of a computer implemented method for training the first neural network as disclosed herein, namely a layer-by-layer training of the first neural network. Layer-by-layer training may be seen as the dynamic model being trained one layer at a time. In other words, each layer is trained on the activations from the previous layer, and the parameters for that layer are updated before moving on to the next layer. This training method may be advantageous for tasks where the relationship between the input and the output is more complex, where computational resources available for training are limited, and/or when new samples are expected to be very different from existing inputs. The method increases the generalization power of the model. Layer-by-layer training can also be useful for training dynamic models with different structures, where the number of neurons or connections in each layer may change dynamically based on the input data. This can help to optimize the use of computational resources and improve the accuracy of the model.

The method for training the first neural network comprises obtaining an audio dataset comprising one or more audio signals 53. The one or more audio signals 53 may be obtained via one or more microphones 10E and/or via a first wireless transceiver 10F. In one or more examples or embodiments, the one or more audio signals may be obtained from a database and/or a memory of the audio device 10. In the training method of Fig. 5, audio signals 53 are input for the training of each layer. In the training method of Fig. 5, each layer is trained one at the time.

The method comprises training, based on the audio dataset (such as based on the one or more audio signals 53), the first neural network to perform an audio processing task at at least one of the first intermediate layers of the first neural network for provision of a first intermediate layer having an exit possibility for provision of an intermediate layer output. In the example of Fig. 5, the method comprises training, based on the audio dataset (such as based on the one or more audio signals 53), the first neural network to perform an audio processing task at each of the first intermediate layers of the first neural network for provision of first intermediate layers each having an exit possibility for provision of an intermediate layer output. In other words, the method may comprise training the audio enhancement module as disclosed herein to perform an audio processing task at each predefined potential exit stage, such as exit possibility. The example of Fig. 5 shows a second example of a computer implemented method for training the first neural network as disclosed herein, namely a layer-by-layer training of the first neural network.

In the example of Fig. 5, the first primary intermediate layer 20A is trained in a first step S1. The first primary intermediate layer 20A provides a first primary intermediate layer output 56. As may be observed in Fig. 5, the first primary intermediate layer output 56 is used to determine a first loss function 66A based on the first primary intermediate layer output 56 and on first clean audio signals 70A.

In a second step S2, the audio signals 53 are input to a frozen first primary intermediate layer 20A1, i.e. where the parameters of the first primary intermediate layer 20A are frozen or fixed. Then the output of the frozen first primary intermediate layer 20A1 is input to the first secondary intermediate layer 20B. The first secondary intermediate layer 20B provides a first secondary intermediate layer output 64. The first secondary intermediate layer output 64 is then used to determine a second loss function 66B based on the first secondary intermediate layer output 64 and on second clean audio signals 70B.

In a n'th step SN, the audio signals 53 are input to a frozen first primary intermediate layer 20A1, i.e. where the parameters of the first primary intermediate layer 20A are frozen or fixed. Then the output of the frozen first primary intermediate layer 20A1 is input to a frozen first secondary intermediate layer 20B1 which then outputs to the next layer until the first output layer 20C (such as an n'th layer of the first neural network) of the first neural network. Finally, an first output layer output 68 is used to determine an n'th loss function 66C based on the first output layer output 68 and on n'th clean audio signals 70C. The first neural network may thereby be trained layer-by-layer by repeating this process.

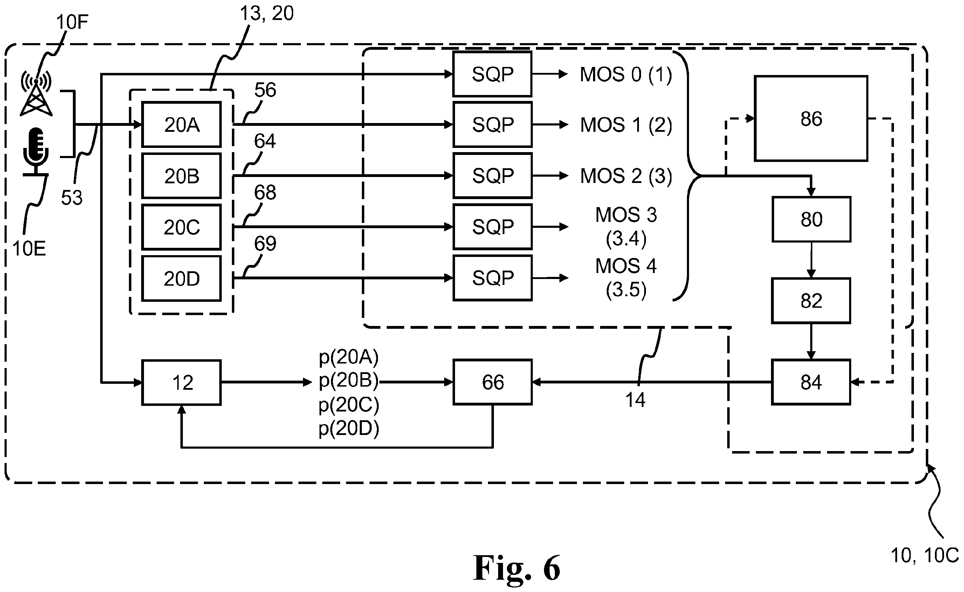

Fig. 6 schematically illustrates an example audio device 10, such as training of one or more processors 10C as disclosed herein, according to the present disclosure, where a third training technique as disclosed herein is applied.

Fig. 6 shows a third example of a computer implemented method for training a second exit module 12 as disclosed herein, such as a third example of a computer implemented method as disclosed herein. For example, Fig. 6 may illustrate a third example of a computer implemented method for training a third neural network as disclosed herein. Fig. 6 may illustrate the training of the audio device 10 of Fig. 3, such as of the second exit module 12 (e.g., the third neural network) of Fig. 3.

In one or more examples or embodiments, the second exit module 12 is configured to predict, based on the first audio device parameter, which second predicted layer of the first model layers to exit from when processing the audio input signal. The second exit module 12 may be configured to predict which layer, such as which first model layer of the first neural network (such as 20A, 20B, 20C, 20D), will be an optimal layer to exit from when processing the audio input signal. The prediction of a predicted layer (such as the first predicted layer, the second predicted layer, and/or the third predicted layer as disclosed herein) may be based on the one or more features (such as based on a quality of the audio input signal 53), a prediction of a quality of an output (such as based on a quality of an output of the first predicted layer), a performance of an output of a layer (such as based on a performance of an output of the first predicted layer), user preferences, and/or one or more audio device parameters (such as based on a capability of the audio device).

In other words, the second exit module 12 may be configured to predict, based on the one or more audio device parameters as disclosed herein, which second predicted layer of the first model layers to exit from. It may be appreciated that the second predicted layer may be selected from the one or more first intermediate layers or the output layer. For example, the second exit module 12 may be configured to predict which intermediate layer of the one or more first intermediate layers to exit from. The second exit module 12 may be configured to predict the second predicted layer before the audio enhancement module 13 has started the processing of the audio input signal 53. The second predicted layer may be an intermediate layer of the one or more first intermediate layers. In one or more examples or embodiments, the second predicted layer is different from the one or more first intermediate layers.

In one or more examples or embodiments, the audio device 10, such as the second exit module 12, may be configured to predict a minimum layer at which the audio enhancement module 13 can exit the processing using the first neural network 20 in order to provide an acceptable audio output signal. In other words, the audio device 10, such as the second exit module 12, may be configured to predict a minimum layer at which the audio enhancement module 13 can exit the processing using the first neural network 20 in order to have performed at least to some extent a certain audio processing task.

In one or more examples or embodiments, the second exit module 12 is configured to predict, based on the audio input signal 53, which third predicted layer of the first model layers ( 20A, 20b, 20C, 20D) at which a performance, a quality, and/or an efficiency of processing of the audio input signal 53 converges. In other words, the second exit module 12 may be configured to predict at which third predicted layer the first neural network 20 hits a point of diminishing returns. A point of diminishing returns and/or a point of convergence may be seen as a point where every additional input gives a slower improvement in output. In other words, a point of diminishing returns and/or a point of convergence, may be a point where the further processing of the audio input signal will give a slower improvement in output than the previous layers. To predict when a performance, a quality, and/or an efficiency of processing of the audio input signal converges may comprise to predict an improvement potential of the processing of the audio input signal using the output of a layer of the first neural network 20. If it is predicted that the improvement potential of the processing of the audio input signal using the output of a layer is low, then that layer may be predicted to be the third predicted layer. For example, the second exit module 12 may predict that the first neural network 20 will not be able to achieve more than 90% improvement even if the audio enhancement module proceeds with all the layers of the first neural network 20. Then, the second exit module 12 may predict that a layer achieving between 80-90% of improvement is the third predicted layer where the performance, quality, and/or efficiency of processing of the audio input signal converges. In one or more examples or embodiments, the third predicted layer is configured to provide a third predicted layer output.

The third training technique illustrated in Fig. 6, may be for training the prediction by the second exit module 12.

The method for training the second exit module comprises obtaining an audio dataset comprising one or more audio signals 53. The one or more audio signals 53 may be obtained via one or more microphones 10E and/or via a first wireless transceiver 10F. In one or more examples or embodiments, the one or more audio signals may be obtained from a database and/or a memory of the audio device 10. In the training method of Fig. 6, audio signals 53 are input to the audio enhancement module 13, such as the first neural network 20. The audio enhancement module 13 may then output for each first intermediate layer of the first neural network 20 an intermediate layer output. For example, a first primary intermediate layer 20A outputs a first primary intermediate layer output 56, a first secondary intermediate layer 20B outputs a first secondary intermediate layer output 64, a first tertiary intermediate layer 20C outputs a first tertiary intermediate layer output 68, and a first quaternary intermediate layer 20D outputs a first quaternary intermediate layer output 69. Then the intermediate layer outputs, 56, 64, 68, 69 are assessed, such as a performance, a quality, and/or an efficiency of the intermediate layer outputs is assessed. For example, the intermediate layer outputs, 56, 64, 68, 69 are input to the first exit module as disclosed herein for assessing their performance, quality, and/or efficiency.

The one or more audio signals 53 may also be assessed directly by bypassing the audio enhancement module 13. For example, the one or more audio signals 53 may also be input directly to the first exit module 14, e.g., bypassing the audio enhancement module 13. This may allow to compare the processing of the audio enhancement module 13 with the un-processed audio signals 53.

The audio device 10, such as the one or more processors 10C and/or the first exit module 14, is then configured to assess the performance, quality, and/or efficiency of the intermediate layer outputs by determining for each of the intermediate layer outputs a speech quality point, SQP.

Further, the audio device 10, such as the one or more processors 10C and/or the first exit module 14, is then configured to determine for each of the intermediate layer outputs, such as each of the SQPs, a mean opinion score, MOS. For example, MOS 0 = 1 is the score of the un-processed audio input signal 53, MOS 1 = 2 is the score of the first primary intermediate layer output 56, MOS 2 = 3 is the score of the first secondary intermediate layer output 64, MOS 3 = 3.4 is the score of the first tertiary intermediate layer output 68, and MOS 4 = 3.5 is the score of the first quaternary intermediate layer output 69.

The audio device 10, such as the one or more processors 10C and/or the first exit module 14, is then configured to determine 80 the difference, such as deltas, between the scores. For example, the delta of the score of the first primary intermediate layer output 56 in view of the score of the un-processed audio input signal 53 may be seen as +1. Therefore, the first primary intermediate layer 20A may be assigned the index 20A +1.

The delta of the score of the first secondary intermediate layer output 64 in view of the score of the first primary intermediate layer output 56 may be seen as +1. Therefore, the first secondary intermediate layer 20B may be assigned the index 20B +1.

The delta of the score of the first tertiary intermediate layer output 68 in view of the score of the first secondary intermediate layer output 64 may be seen as +0.4. Therefore, the first tertiary intermediate layer 20C may be assigned the index 20C +0.4.

The delta of the score of the first quaternary intermediate layer output 69 in view of the score of the first tertiary intermediate layer output 68 may be seen as +0.1. Therefore, the first quaternary intermediate layer 20D may be assigned the index 20D +0.1.

The audio device 10, such as the one or more processors 10C and/or the first exit module 14, is then configured to determine 82 whether the scores of the intermediate layer outputs satisfy a criterion, such as the first criterion as disclosed herein. The criterion may for example comprise a delta threshold to satisfy. In this example, the delta threshold to satisfy may be set to 0.3. The audio device 10, such as the one or more processors 10C and/or the first exit module 14, may then be configured to select the intermediate layer output for which the delta was satisfying the delta threshold of 0.3. Accordingly, the first tertiary intermediate layer output 68 is selected. This may allow to find a point of diminishing return, such as a point of convergence, as described herein. The index of the first intermediate layer, in this case the first tertiary intermediate layer 20C, corresponding to the delta satisfying the delta threshold is therefore selected as the optimal first intermediate layer to exit from. In one or more examples or embodiments, the audio device 10, such as the one or more processors 10C and/or the first exit module 14, is then configured to convert 84 this result using 1-hot encoding. For example, since the first tertiary intermediate layer 20C has been determined to be the optimal exit layer, then it may be encoded to read 3 → [0, 0, 1, 0]. The outcome of the conversion may enable to input the outcome of the intermediate layer output assessment to a loss function 66 used for training of the second exit module 12. In other words, the outcome 3 → [0, 0, 1, 0] may be read by the second exit module 12 as the probabilities of the intermediate layer outputs being the optimal first intermediate layers to exit from. According to this example, the probabilities would read: p(20A) = 0, p(20B) = 0, p(20C) = 1, p(20D) = 0. In other words, the first tertiary intermediate layer 20C was determined to be the optimal first intermediate layer to exit from. It may be appreciated that the loss function 66 used to train the second exit module 12 may be seen as a cross-entropy loss function.

In one or more examples or embodiments, the second exit module 12 may be trained under operation, such as on the fly. For example, the second exit module 12 may be configured to perform a verification, such as a sanity check, once in a while, in order to verify that the predicted first predicted layer is the optimal prediction. It may be appreciated that the first exit module 14 may provide a verification of a prediction of the second exit module 12 by verifying an intermediate layer output.

Examples of audio devices, systems, and methods according to the disclosure are set out in the following items:
Item 1. An audio device comprising:
   - an audio enhancement module comprising a first neural network with first model layers including a first input layer, a plurality of first intermediate layers, and a first output layer; and
   - a first exit module;
      wherein the audio enhancement module is configured to process an audio input signal for provision of an audio output signal using the first neural network, and wherein at least one of the first intermediate layers has an exit possibility for providing an intermediate layer output, and wherein the first exit module is configured to determine whether the intermediate layer output satisfies a first criterion, wherein the first criterion is indicative of a performance, a quality, and/or an efficiency of the intermediate layer output, and wherein in accordance with the intermediate layer output satisfying the first criterion, the audio device is configured to determine the audio output signal based on the intermediate layer output.
Item 2. The audio device according to item 1, wherein the audio device comprises a second exit module configured to obtain one or more features of the audio input signal including a first feature, and wherein the second exit module is configured to predict, based on the first feature, which first predicted layer of the first model layers to exit from when processing the audio input signal, wherein the first predicted layer is configured to provide a first predicted layer output, and wherein the audio device is configured to determine the audio output signal based on the first predicted layer output.
Item 3. The audio device according to item 2, wherein the first predicted layer is an intermediate layer of the one or more first intermediate layers.
Item 4. The audio device according to any of items 2-3, wherein the second exit module is configured to obtain one or more audio device parameters including a first audio device parameter, and wherein the second exit module is configured to predict, based on the first audio device parameter, which second predicted layer of the first model layers to exit from when processing the audio input signal, wherein the second predicted layer is configured to provide a second predicted layer output, and wherein the audio device is configured to determine the audio output signal based on the second predicted layer output.
Item 5. The audio device according to item 4, wherein the first audio device parameter is a power parameter, a battery parameter, and/or a processing capability parameter, and wherein the second exit module is configured to predict, based on the power parameter, the battery parameter, and/or the processing capability parameter, which second predicted layer of the first neural network to exit from when processing the audio input signal.
Item 6. The audio device according to any of items 2-5, wherein the second exit module is configured to predict, based on the audio input signal, which third predicted layer of the first model layers at which a performance, a quality, and/or an efficiency of processing of the audio input signal converges, and wherein the audio device is configured to determine the audio output signal based on the third predicted layer.
Item 7. The audio device according to item 6, wherein to determine the audio output signal based on the prediction comprises to determine, based on the third predicted layer, which layer of the first model layers to exit from when processing the audio input signal.
Item 8. The audio device according to any of items 6-7, wherein the third predicted layer is configured to provide a third predicted layer output, and wherein the audio device is configured to determine the audio output signal based on the third predicted layer output.
Item 9. The audio device according to any of items 6-8, wherein the audio device is configured to determine the audio output signal based on an output of the layer before the third predicted layer.
Item 10. The audio device according to any of items 2-9, wherein the first exit module comprises a second neural network, and wherein to determine whether the intermediate layer output satisfies a first criterion comprises to determine whether the intermediate layer output satisfies the first criterion using the second neural network.
Item 11. A computer-implemented method for training the first neural network of any of items 1-10, wherein the method comprises:
Item 12. A method, performed by an audio device, for enabling efficient neural network processing, wherein the audio device comprises an audio enhancement module comprising a first neural network with first model layers including a first input layer, a plurality of first intermediate model layers, and a first output layer; and a first exit module, wherein the method comprises:
   - processing (S106) an audio input signal for provision of an audio output signal using the first neural network, wherein at least one of the first intermediate layers has an exit possibility for providing an intermediate layer output,
   - determining (S108), using the first exit module, whether the intermediate layer output satisfies a first criterion, wherein the first criterion is indicative of a performance, a quality, and/or an efficiency of an intermediate layer output, and
   - in accordance with the intermediate layer output satisfying the first criterion, determining (S110) the audio output signal based on the intermediate layer output.
Item 13. The method according to item 12, the method comprising:
   - obtaining (S102), using a second exit module, one or more features of the audio input signal including a first feature,
   - predicting (S104), based on the first feature, which first predicted layer of the first model layers to exit from when processing (S106) the audio input signal, wherein the first predicted layer is configured to provide a first predicted layer output, and
   - determining (S110A) the audio output signal based on the first predicted layer output.
Item 14. The method according to item 13, the method comprising:
   - obtaining (S103), using the second exit module, one or more audio device parameters including a first audio device parameter,
   - predicting (S105), using the second exit module and based on the first audio device parameter, which second predicted layer of the first model layers to exit from when processing (S106) the audio input signal, wherein the second predicted layer is configured to provide a second predicted layer output, and
   - determining (S110B) the audio output signal based on the second predicted layer output.
Item 15. The method according to item 14, wherein predicting (S105) which second predicted layer of the first model layers to exit from comprises predicting (S105A), based on the power parameter, the battery parameter, and/or the processing capability parameter, which second predicted layer of the first neural network to exit from when processing the audio input signal
Item 16. The method according to any of items 13-15, the method comprising:
   - predicting (S107), using the second exit module and based on the audio input signal, which third predicted layer of the first model layers at which a performance, a quality, and/or an efficiency of processing of the audio input signal converges, and
   - determining (S110C) the audio output signal based on the third predicted layer.
Item 17. The method according to item 16, wherein determining (S110C) the audio output signal comprises determining (S110C1), based on the third predicted layer, which layer of the first model layers to exit from when processing the audio input signal.
Item 18. The method according to any of items 16-17, wherein the third predicted layer is configured to provide a third predicted layer output, and wherein the method comprises determining (S110D) the audio output signal based on the third predicted layer output.
Item 19. The method according to any of items 16-18, the method comprising:
   - determining (S110E) the audio output signal based on an output of the layer before the third predicted layer.
Item 20. The method according to any of items 12-19, wherein the first exit module comprises a second neural network, and wherein determining (S108) whether the intermediate layer output satisfies a first criterion comprises determining (S108A) whether the intermediate layer output satisfies the first criterion using the second neural network.
Item 21. A computer-implemented method for training the first neural network of any of items 1-10, wherein the method comprises:
   - obtaining an audio dataset comprising one or more audio signals; and
   - training, based on the audio dataset, the first neural network to perform an audio processing task at at least one of the first intermediate layers of the first neural network for provision of a first intermediate layer having an exit possibility for provision of an intermediate layer output.
Item 22. An audio device comprising:
   - an audio enhancement module comprising a first neural network with first model layers including a first input layer, a plurality of first intermediate layers, and a first output layer;
   - a second exit module configured to obtain one or more features of the audio input signal including a first feature,
   wherein the audio enhancement module is configured to process an audio input signal for provision of an audio output signal using the first neural network, and wherein at least one of the first intermediate layers has an exit possibility for providing an intermediate layer output, and wherein the second exit module is configured to predict, based on the first feature, which first predicted layer of the first model layers to exit from when processing the audio input signal, wherein the first predicted layer is configured to provide a first predicted layer output, and wherein the audio device is configured to determine an audio output signal based on the first predicted layer output.
Item 23. An audio device comprising:
   - an audio enhancement module comprising a first neural network with first model layers including a first input layer, a plurality of first intermediate layers, and a first output layer;
   - a second exit module configured to obtain one or more audio device parameters including a first audio device parameter, and wherein the second exit module is configured to predict, based on the first audio device parameter, which second predicted layer of the first model layers to exit from when processing the audio input signal, wherein the second predicted layer is configured to provide a second predicted layer output, and wherein the audio device is configured to determine an audio output signal based on the second predicted layer output.
Item 24. An audio device comprising:
   - an audio enhancement module comprising a first neural network with first model layers including a first input layer, a plurality of first intermediate layers, and a first output layer;
   - a second exit module configured to predict, based on the audio input signal, which third predicted layer of the first model layers at which a performance, a quality, and/or an efficiency of processing of the audio input signal converges, and wherein the audio device is configured to determine the audio output signal based on the third predicted layer.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering. Furthermore, the labelling of a first element does not imply the presence of a second element and vice versa.

It may be appreciated that the Figures comprise some circuitries or operations which are illustrated with a solid line and some circuitries, components, features, or operations which are illustrated with a dashed line. Circuitries or operations which are comprised in a solid line are circuitries, components, features or operations which are comprised in the broadest example. Circuitries, components, features, or operations which are comprised in a dashed line are examples which may be comprised in, or a part of, or are further circuitries, components, features, or operations which may be taken in addition to circuitries, components, features, or operations of the solid line examples. It should be appreciated that these operations need not be performed in order presented. Furthermore, it should be appreciated that not all of the operations need to be performed. The example operations may be performed in any order and in any combination. It should be appreciated that these operations need not be performed in order presented. Circuitries, components, features, or operations which are comprised in a dashed line may be considered optional.

Other operations that are not described herein can be incorporated in the example operations. For example, one or more additional operations can be performed before, after, simultaneously, or between any of the described operations.

Certain features discussed above as separate implementations can also be implemented in combination as a single implementation. Conversely, features described as a single implementation can also be implemented in multiple implementations separately or in any suitable sub-combination. Moreover, although features may be described above as acting in certain combinations, one or more features from a claimed combination can, in some cases, be excised from the combination, and the combination may be claimed as any sub-combination or variation of any sub-combination.

It is to be noted that the word "comprising" does not necessarily exclude the presence of other elements or steps than those listed.

It is to be noted that the words "a" or "an" preceding an element do not exclude the presence of a plurality of such elements.

It is to be noted that the term "indicative of" may be seen as "associated with", "related to", "descriptive of", "characterizing", and/or "defining". The terms "indicative of', "associated with" "related to", "descriptive of", "characterizing", and "defining" can be used interchangeably. The term "indicative of" can be seen as indicating a relation. For example, weight data indicative of weight may comprise one or more weight parameters.

It is to be noted that the word "based on" may be seen as "as a function of" and/or "derived from". The terms "based on" and "as a function of" can be used interchangeably. For example, a parameter determined "based on" a data set can be seen as a parameter determined "as a function of" the data set. In other words, the parameter may be an output of one or more functions with the data set as an input.

A function may be characterizing a relation between an input and an output, such as mathematical relation, a database relation, a hardware relation, logical relation, and/or other suitable relations.

It should further be noted that any reference signs do not limit the scope of the claims, that the examples may be implemented at least in part by means of both hardware and software, and that several "means", "units" or "devices" may be represented by the same item of hardware.

Although features have been shown and described, it will be understood that they are not intended to limit the claimed disclosure, and it will be made obvious to those skilled in the art that various changes and modifications may be made without departing from the scope of the claimed disclosure. The specification and drawings are, accordingly, to be regarded in an illustrative rather than restrictive sense. The claimed disclosure is intended to cover all alternatives, modifications, and equivalents.

## Claims

1. An audio device comprising:
- an audio enhancement module comprising a first neural network with first model layers including a first input layer, a plurality of first intermediate layers, and a first output layer; and
- a first exit module;
wherein the audio enhancement module is configured to process an audio input signal for provision of an audio output signal using the first neural network, and wherein at least one of the first intermediate layers has an exit possibility for providing an intermediate layer output, and wherein the first exit module is configured to determine whether the intermediate layer output satisfies a first criterion, wherein the first criterion is indicative of a performance, a quality, and/or an efficiency of the intermediate layer output, and wherein in accordance with the intermediate layer output satisfying the first criterion, the audio device is configured to determine the audio output signal based on the intermediate layer output.

2. The audio device according to claim 1, wherein the audio device comprises a second exit module configured to obtain one or more features of the audio input signal including a first feature, and wherein the second exit module is configured to predict, based on the first feature, which first predicted layer of the first model layers to exit from when processing the audio input signal, wherein the first predicted layer is configured to provide a first predicted layer output, and wherein the audio device is configured to determine the audio output signal based on the first predicted layer output.

3. The audio device according to claim 2, wherein the first predicted layer is an intermediate layer of the one or more first intermediate layers.

4. The audio device according to any of claims 2-3, wherein the second exit module is configured to obtain one or more audio device parameters including a first audio device parameter, and wherein the second exit module is configured to predict, based on the first audio device parameter, which second predicted layer of the first model layers to exit from when processing the audio input signal, wherein the second predicted layer is configured to provide a second predicted layer output, and wherein the audio device is configured to determine the audio output signal based on the second predicted layer output.

5. The audio device according to claim 4, wherein the first audio device parameter is a power parameter, a battery parameter, and/or a processing capability parameter, and wherein the second exit module is configured to predict, based on the power parameter, the battery parameter, and/or the processing capability parameter, which second predicted layer of the first neural network to exit from when processing the audio input signal.

6. The audio device according to any of claims 2-5, wherein the second exit module is configured to predict, based on the audio input signal, which third predicted layer of the first model layers at which a performance, a quality, and/or an efficiency of processing of the audio input signal converges, and wherein the audio device is configured to determine the audio output signal based on the third predicted layer.

7. The audio device according to claim 6, wherein to determine the audio output signal based on the prediction comprises to determine, based on the third predicted layer, which layer of the first model layers to exit from when processing the audio input signal.

8. The audio device according to any of claims 6-7, wherein the third predicted layer is configured to provide a third predicted layer output, and wherein the audio device is configured to determine the audio output signal based on the third predicted layer output.

9. The audio device according to any of claims 6-8, wherein the audio device is configured to determine the audio output signal based on an output of the layer before the third predicted layer.

10. The audio device according to any of claims 2-9, wherein the first exit module comprises a second neural network, and wherein to determine whether the intermediate layer output satisfies a first criterion comprises to determine whether the intermediate layer output satisfies the first criterion using the second neural network.

11. A method, performed by an audio device, for enabling efficient neural network processing, wherein the audio device comprises an audio enhancement module comprising a first neural network with first model layers including a first input layer, a plurality of first intermediate model layers, and a first output layer; and a first exit module, wherein the method comprises:
- processing (S106) an audio input signal for provision of an audio output signal using the first neural network, wherein at least one of the first intermediate layers has an exit possibility for providing an intermediate layer output,
- determining (S108), using the first exit module, whether the intermediate layer output satisfies a first criterion, wherein the first criterion is indicative of a performance, a quality, and/or an efficiency of an intermediate layer output, and
- in accordance with the intermediate layer output satisfying the first criterion, determining (S110) the audio output signal based on the intermediate layer output.

12. The method according to claim 11, the method comprising:
- obtaining (S102), using a second exit module, one or more features of the audio input signal including a first feature,
- predicting (S104), based on the first feature, which first predicted layer of the first model layers to exit from when processing (S106) the audio input signal, wherein the first predicted layer is configured to provide a first predicted layer output, and
- determining (S110A) the audio output signal based on the first predicted layer output.

13. The method according to claim 12, the method comprising:
- obtaining (S103), using the second exit module, one or more audio device parameters including a first audio device parameter,
- predicting (S105), using the second exit module and based on the first audio device parameter, which second predicted layer of the first model layers to exit from when processing (S106) the audio input signal, wherein the second predicted layer is configured to provide a second predicted layer output, and
- determining (S110B) the audio output signal based on the second predicted layer output.

14. The method according to claim 13, wherein predicting (S105) which second predicted layer of the first model layers to exit from comprises predicting (S105A), based on the power parameter, the battery parameter, and/or the processing capability parameter, which second predicted layer of the first neural network to exit from when processing the audio input signal

15. A computer-implemented method for training the first neural network of any of claims 1-10, wherein the method comprises:
- obtaining an audio dataset comprising one or more audio signals; and
- training, based on the audio dataset, the first neural network to perform an audio processing task at at least one of the first intermediate layers of the first neural network for provision of a first intermediate layer having an exit possibility for provision of an intermediate layer output.
